(19) Europäisches Patentamt
European Patent Office
Office européen des brevets

(11) EP 0 926 749 A2

(12) **EUROPEAN PATENT APPLICATION**

(43) Date of publication:
30.06.1999 Bulletin 1999/26

(51) Int. Cl.[6]: **H01M 4/04**, H01M 10/04,
B05C 5/02, B05C 9/04

(21) Application number: 98121542.9

(22) Date of filing: 17.11.1998

(84) Designated Contracting States:
AT BE CH CY DE DK ES FI FR GB GR IE IT LI LU
MC NL PT SE
Designated Extension States:
AL LT LV MK RO SI

(30) Priority: 18.11.1997 JP 31677197
18.11.1997 JP 31677297

(71) Applicant:
Matsushita Electric Industrial Co., Ltd.
Kadoma-shi, Osaka 571-8501 (JP)

(72) Inventors:
• Watanabe, Masaru
Nishinomya-shi, Hyogo 663-8186 (JP)
• Masuda, Noboru
Ikoma-shi, Nara 660-0222 (JP)

(74) Representative:
Grünecker, Kinkeldey,
Stockmair & Schwanhäusser
Anwaltssozietät
Maximilianstrasse 58
80538 München (DE)

(54) **Coating apparatus and coating method**

(57) A coating apparatus in which a first nozzle 1 and a second nozzle 2 are arranged so as to oppose to each other on both side of a substrate 3 which travels continuously. A tip of the first nozzle has a support section 101 which is located upstream in the direction of the substrate 3 travells and has a shape of a curved surface protruding toward the substrate to support a surface of the substrate 3 which is not coated, as well as a discharge section which is located downstream of the support section and includes a slit 105, whereas the second nozzle 2 has a tip which is composed of at least a discharge section in a similar shape of the first nozzle, at least a mechanism which adjusts a gap between the second nozzle and the substrate 3, and a mechanism which adjusts an embracing angle of the substrate 3 for the support section 101 of the first nozzle 1.

Fig. 1

**Description**

BACKGROUND OF THE INVENTION

Field of the Invention

The present invention relates to a coating apparatus and a coating method which can be utilized to coat a current collector with a paste of an active substance used, for example, in lithium ion batteries and nickel-hydrogen batteries.

Description of the Related Art

In the field of manufacturing electrode sheets to be used in secondary lithium ion batteries, nickel-hydrogen batteries and capacitors, it is conventionally necessary to coat both surfaces of a substrate with coating materials. From a viewpoint of productivity in these fields, it is strongly desired to coat both the surfaces of the substrate at the same time. Japanese Patent Application Laid-Open No. 7-65816, for example, discloses a coating means equipped with two nozzles which are opposed to a substrate used to coat both the surfaces thereof with coating materials at the same time.

Further, in the recent years as demand increases in particular for secondary batteries which are to be used in portable telephones and so on, it is strongly desired to increase the capacities of batteries. When a positive electrode sheet, a separator and a negative electrode sheet are wound in a cylindrical or rectangular battery which is to be used in such an apparatus, an outside layer of an active substance does not contribute to charging or discharging a current collector on an outermost circumference. In the case of a rectangular battery, an inside layer of an active substance contributes to neither charging or discharging a current collector on an innermost circumference, since it is opposed to a layer of the active substance having the same polarity.

Accordingly, it is possible to increase the layers of an active substance in a predetermined volume of a battery and enhance the capacity of the battery by using an electrode sheet which has no active substance layer as an outside electrode sheet for the outermost current collector or as an inside electrode sheet for the innermost current collector.

Such an electrode sheet can be manufactured by a method which coats a layer of an active substance over an entire surface of a current collector and then removes a portion of the layer which corresponds to an outside layer for a current collector on an outermost circumference. However, this method not only raises manufacturing costs due to loss of expensive active substances but also damages a layer of active substance formed on a rear surface by removing the layer corresponding to the outermost circumference, thereby making the layer of the active substance apt to be easily peeled off, and produces a defect that is fatal to a battery, that of degrading the cycle characteristic remarkably.

It is therefore necessary to form a layer of an active substance only on either surface of a current collector on the outermost circumference or the innermost circumference at the stage of coating a substrate with a paste of an active substance.

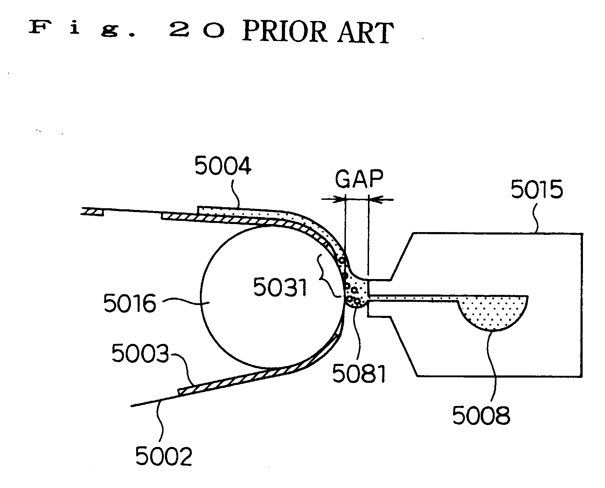

Japanese Patent Application Laid-Open No. 7-68208 discloses a coating means or method which manufactures a battery electrode sheet by intermittently coating a current collector with a paste of an active substance (hereinafter referred to simply as paste). This coating means winds a current collector 5002 around a back roll 5016 and coats the current collector 5002 with a paste by intermittently supplying it from a nozzle 5015 which is disposed in opposition to the back roll 5002, thereby forming portions which are not coated with the paste, or lead welding portions as shown in FIG. 20.

Using the coating means disclosed by the Japanese Patent Application Laid-Open No. 7-65816 mentioned above, the inventor et al. practically formed films having the same thickness of a paste for batteries on the front and rear surfaces of a metal foil at the same time using the paste for electrodes as a coating material, but the coated films were remarkably non-uniform in thickness in the coating width direction and the travelling direction of the metal foil, whereby the metal foil was unusable as an electrode sheet for a battery.

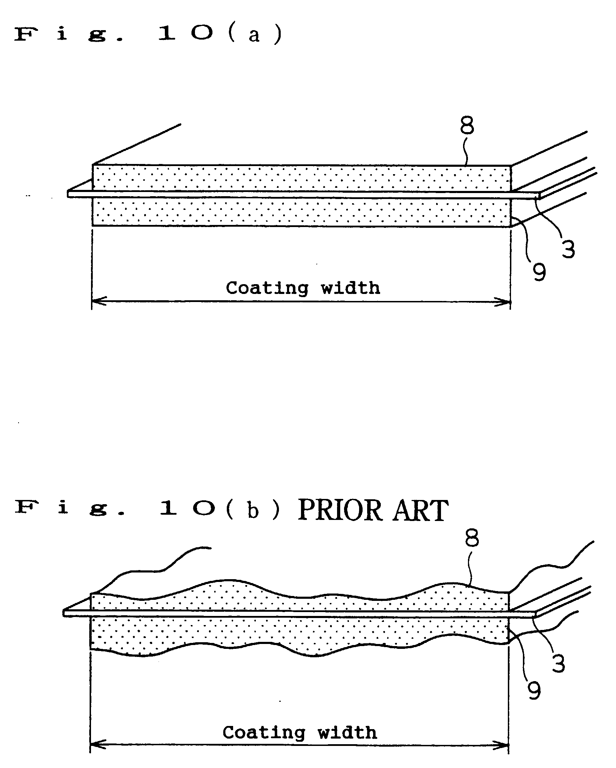

By measuring thickness non-uniformity in the coating width direction of the sample having the surfaces which were coated at the same time by the coating means described above, it was confirmed that the thickness was remarkably undulated as shown in FIG. 10(b) and had a variation of 18%. Further, the inventor et al. found another problem in that the coated films had a large number of pinholes.

These two problems were traced to a cause which is described below:

It was found that the remarkable variation in thickness of the coated films was due to the fact that a substrate was wrinkled while it passed between the two nozzles, and gaps between the substrate and the nozzles were made unstable due to fluttering of the substrate. For example, a large amount of the coating material flowed into a concave portion of a wrinkle, thereby thickening the coated film thicker at the portion corresponding thereto.

Further, a large number of pinholes were produced since the gap between one of the nozzles and the substrate was too large, thereby allowing air to be taken into the coating material. Further, air might be taken in also when a small gap varies to a large gap between the nozzle and the substrate.

These two problems are posed not only by the conventional coating means described above, which is configured to coat both surfaces of a substrate at the same time with a coating material as described above, but also by the conventional coating means which is configured to coat one surface at a time.

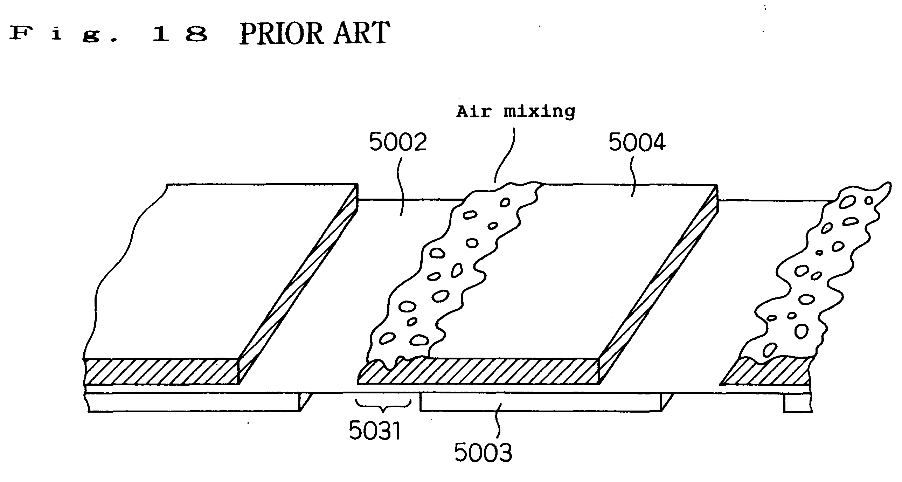

On the other hand, the inventor et al. found a problem that the coating means disclosed by Japanese Patent Application Laid-Open No. 7-68208 allowed a large amount of air to be mixed into an end of an active substance layer 5004 as shown in FIG. 18 at the stage of forming an electrode sheet by coating, whereby it is unusable as an electrode.

Speaking more concretely, the conventional coating means mentioned above forms layers 5003 of an active substance on a surface of a current collector 5002 intermittently at a predetermined pitch. At this stage, a gap between the nozzle 5015 and the back roll 5016 is ordinarily kept at 300 μm, and a layer of the active substance can be formed with no problem. For forming layers 5004 of the active substance on the other surface of the current collector 5002 intermittently at locations deviated at the predetermined pitch at the next stage, a gap between the current collector 5002 and the nozzle 5015 must be set as 300 μm, which is the same as that described above as shown in FIG. 20. Though a layer 5004 of the active substance can be formed at this stage with no problem at a portion on which the layer 5003 of the active substance has been formed, the gap is thickened at a portion 5031 on which the layer 5003 of the active substance is not formed by an increment of the thickness of the layer 5003 of the active substance and has a thickness as large as approximately 600 μm. As a result, a large amount of air is taken into a paste reservoir 5081 which is formed between the nozzle 5015 and the current collector 5002, thereby being mixed into the layer 5004 of the active substance. This phenomenon produces a defect which is fatal to a characteristic of a battery.

SUMMARY OF THE INVENTION

In view of the problems posed by the conventional coating apparatus described above, the present invention has a primary object to provide a coating apparatus and a coating method which makes uniform a coated film.

In view of the problems posed by the conventional coating apparatus described above, the present invention has another object of providing a coating apparatus and a coating method which reduce pinholes to be produced in a number smaller than conventional.

The 1st invention of the present invention is a coating apparatus comprising a first nozzle means having (1) a discharge section for discharging a coating material on a substrate travelling in a predetermined direction and having a surface which is not coated, and (2) a support section which is fixed upstream of said discharge section in the travelling direction of said substrate as standard and has a support surface to support said surface which is not coated directly or indirectly; and a guide means which guides said substrate so that said surface which is not coated is pressed directly or indirectly on said support surface.

The 2nd invention of the present invention is a coating apparatus according to said 1st invention, wherein said guide means is a guide roll which is disposed upstream of said support section, wherein said substrate has two surfaces which are not coated, and wherein said coating apparatus comprises a second nozzle means which is opposed to said first nozzle means is and used to apply a coating material to a surface which is not coated and is located on a side opposite to the surface to be coated by said first nozzle means.

The 3rd invention of the present invention is a coating apparatus according to said 1st invention, wherein said guide means is disposed upstream of said support section, wherein said substrate has two surfaces which are not coated, wherein said coating apparatus comprises a second nozzle means which is disposed at a location downstream of said first nozzle means and is used to coat a coating material on a second surface which is not coated and is located on a side opposite to the surface to be coated by said first nozzle means, and wherein said second nozzle means has a second support section which comprises (1) a second discharge section which discharges a coating material to the second surface which is not coated of said substrate, and (2) a second support section having the second support surface which is fixed upstream of said second discharge section in the travelling direction of said substrate as standard, and supports directly or indirectly said second surface which is not coated.

The 4th invention of the present invention is a coating apparatus according to said 1st invention, wherein said substrate has two surfaces which are not coated, wherein said coating apparatus comprises a second nozzle means which is disposed at a location upstream of said first nozzle means and used to apply a coating material to a surface which is not coated and is located on a side opposite to the surface to be coated by said first nozzle means, and wherein said guide means is a device which is disposed at a location opposed to said support section and blasts a gas on the surface opposed to the surface which is not coated of said substrate, for making said substrate float up so that said surface which is not coated is pressed directly onto said support surface or guide roll which is disposed upstream of said support section.

The 25th invention of the present invention is a coating method comprising a support step to directly or indirectly support a surface which is not coated of a substrate travelling in a predetermined direction; and a first coating step to apply a first coating material to said surface which is not coated, wherein said support at said support step is performed by taking said travelling direction as standard and utilizing a support surface of a support section which is fixed and does not rotate upstream a discharge port for discharging said first coating material to said surface which is not coated.

The 26th invention of the present invention is a coating method according to said 25th invention comprising: a guide step which is disposed upstream said support step to guide said substrate so as to press said surface which is not coated directly or indirectly on at least said support surface; and a second coating step to apply a second coating material, substantially at the same time with said first coating material, on locations on a rear surface of said substrate which are opposite to locations of said first coating step.

The 27th invention of the present invention is a coating method according to said 25th invention, wherein said coating method comprises: a second support step to directly or indirectly support the surface which is not coated of said substrate downstream said first coating step; and a second coating step to apply a second coating material, substantially at the same time with said first coating material, on locations on a rear surface of said substrate which are at downstream locations coated at said first coating step, wherein said support at said second support step is performed utilizing a support surface which is fixed and does not rotate upstream a blowout slot for blowing out said second coating material to a surface which is not coated.

The 28th invention of the present invention is a coating method according to said 25th invention, wherein said coating method comprises: a second coating step to apply, upstream of said first coating step, a second coating material to a surface which is not coated of said substrate which is opposite to a surface coated at said first coating step; and a guide step to (1) press said surface which is not coated directly or indirectly onto said support surface by blowing out a gas from a location opposed to said support section to a surface of said substrate opposed to said surface which is not coated so as to make said substrate float up from the surface which blows out said gas or (2) to press said surface which is not coated directly or indirectly onto said support surface with a guide section disposed upstream of at least said support step, wherein said second coating material is applied intermittently at a predetermined pitch at said second coating step and said first coating material is applied, at said first coating step, intermittently at the predetermined pitch to locations which are deviated for a predetermined distance from locations of said second coating material applied to said substrate.

BRIEF DESCRIPTION OF THE DRAWINGS

FIG. 1 is a schematic sectional view showing a configuration of an embodiment A1 of the coating apparatus according to the present invention;

FIG. 2 is a schematic sectional view descriptive of a method to set a gap d2 between a second nozzle 2 and a substrate 3 in the embodiment A1;

FIG. 3 is a schematic sectional view exemplifying another configuration of nozzles 1 and 2 in the embodiment A1;

FIGS. 4(a) through 4(c) are schematic side views descriptive of an example of a configuration of nozzle tips in the embodiment A1;

FIG. 5(a) through 5(c) are schematic side views descriptive of a configuration of nozzle tips in the embodiment A1;

FIG. 6 is a perspective view illustrating an embodiment A2 of the coating apparatus according to the present invention;

FIG. 7 is a schematic sectional view illustrating an embodiment A3 of the coating apparatus according to the present invention;

FIGS. 8(a) through 8(b) are schematic side sectional views illustrating a nozzle body in an embodiment A4 of the present invention;

FIG. 9 is a schematic side sectional view illustrating a nozzle body in an embodiment A5 of the present invention;

FIG. 10(a) is a sectional view of a coated film in the embodiment A1 of the present invention;

FIG. 10(b) is a sectional view of a coated film in a conventional example;

FIG. 11 is a graph descriptive of measured results of discharging capacities in the embodiments A1 through A5;

FIG. 12 is a graph illustrating a rheology characteristic of a coating material used in the embodiments of the present invention;

FIG. 13 is a schematic diagram showing a divided spacer used in the embodiment A5 of the present invention;

FIG. 14 is a schematic sectional view illustrating manufacturing system for an embodiment B1 of the present invention;

FIG. 15 is a schematic sectional view illustrating a manufacturing system for an embodiment B2 of the present invention;

FIG. 16 is a schematic sectional view illustrating a manufacturing system for an embodiment B3 of the present

EP 0 926 749 A2

invention;

FIGS. 17(a) and 17(b) are schematic side views exemplifying a nozzle tip used in the embodiment B1 of the present invention;

FIG. 18 is a perspective view illustrating an electrode sheet for batteries which is formed by conventional coating means and has not been cut yet;

FIG. 19 is a perspective view illustrating an electrode sheet which is formed by the embodiments B1 through B4 of the present invention and which has not been cut yet;

FIG. 20 is a schematic sectional view illustrating the conventional coating means;

FIG. 21 is a graph descriptive of measured results of discharging capacities of the embodiments B1 through B4 of the present invention; and

FIG. 22 is a graph descriptive of measured results of cycle characteristics of the embodiments B1 through B4 of the present invention.

[Description of symbols]

| | |
|------|------------------------------|
| 1    | First nozzle                 |
| 2    | Second nozzle                |
| 3    | Substrate                    |
| 4    | First coating material       |
| 5    | Second coating material      |
| 6    | First supply system          |
| 7    | Second supply system         |
| 8    | First coated film            |
| 9    | Second coated film           |
| 10   | Position adjusting mechanism  |
| 11   | First block                  |
| 12   | Second block                 |
| 13   | Third block                  |
| 14   | Spacer                       |
| 15   | Guide roll                   |
| 5001 | Nozzle                       |
| 5002 | Current collector            |
| 5003 | Active substance layers      |
| 5004 | Active substance layers      |
| 5005 | Rolls                        |
| 5006 | Rolls                        |
| 5007 | Aspirator                    |
| 5008 | Paste                        |
| 5009 | Tank                         |
| 5010 | Pump                         |
| 5011 | Filter                       |
| 5012 | Three-way valve              |
| 5013 | Cleaner                      |
| 5014 | Floating device              |
| 5015 | Nozzle                       |
| 5016 | Back roll                    |

DETAILED DESCRIPTION OF PREFERRED EMBODIMENTS

Now, the preferred embodiments of the present invention will be described with reference to the accompanying drawings.

(Embodiment A1)

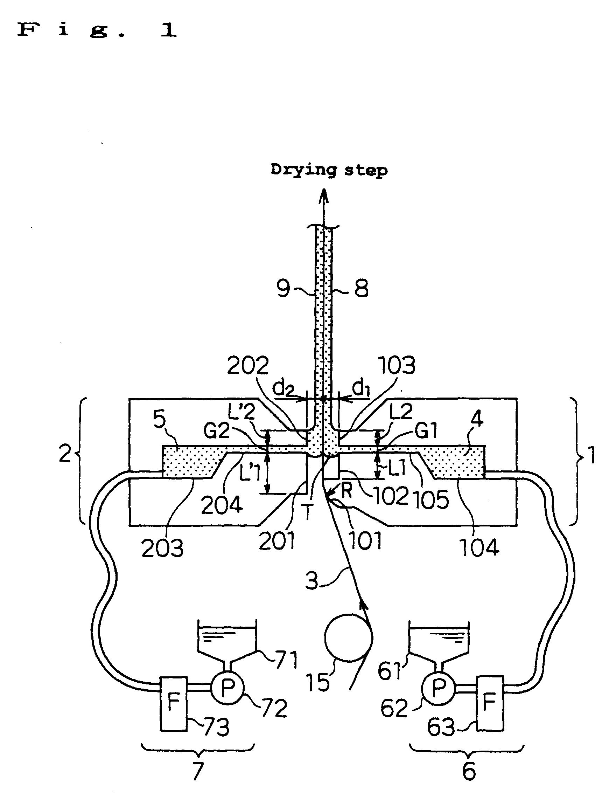

FIG. 1 is a schematic sectional view showing a coating apparatus preferred as an embodiment A1 of the present invention.

5

Referring to FIG. 1, description will be made of a configuration and operations of an apparatus preferred as the embodiment A1 of the present invention as well as an embodiment of the coating method according to the present invention.

As shown in FIG. 1, a first nozzle 1 is composed of a support section 101 having a curved surface which slides along a substrate 3 and supports the substrate 3, an upstream lip 102, a downstream lip 103, a manifold 104 which is a reservoir for a first coating material 4, and a slit 105 which discharges the first coating material to a side of the substrate 3.

Further, a second nozzle 2 is composed of an upstream lip 201, a downstream lip 202, a manifold 203 which is a reservoir for a second coating material 5 and a slit 204 for extruding the second coating material. A section consisting of the slit 204 and the downstream lip 202 of the second nozzle 2 has a form which is the same as a section consisting of the slit 105 and the downstream lip 103 of the first nozzle 1.

The substrate 3 is led by a guide roll 15 to the nozzle 1 so that the substrate 3 is slid along the support section 101 and supported thereby. The first coating material 4 is supplied by a pump 62 from a tank 61 to the manifold 104 of the nozzle 1 through a filter 63 and extruded out of the slit 105.

A gap between the support section 101 and a tip of the downstream lip 103 is adequately set at a size d1 in accordance with a coating thickness and the coating material 4 which is extruded from the slit 105 flows into this gap to form a coating material reservoir T. While forming the coating material reservoir T, the coating material 4 forms a first coated film 8 having a uniform thickness on the substrate 3.

On the other hand, the coating material 5 is supplied by a pump 72 from a tank 71 into the manifold 203 of the nozzle 2 through a filter 73 and extruded from the slit 204, thereafter flowing into a gap between the substrate 3 and the downstream lip 202, and forming a second coated film 9 having a uniform thickness on the substrate 3.

After the coated films 8 and 9 have been formed on both surfaces of the substrate 3 at the same time as described above, the substrate 3 is led into a drying zone (not shown) and wound. The wound substrate is cut into pieces having predetermined sizes in the width direction and the travelling direction, each of which is to be used, for example, as an electrode for a battery.

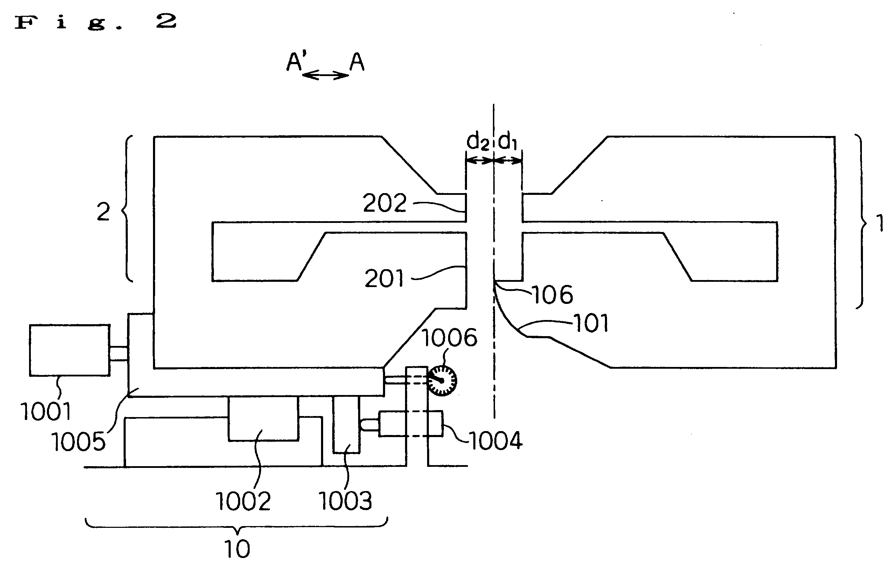

A gap between the second nozzle 2 and the substrate 3 is set adequately at a size d2 in accordance with a thickness of the second coated film 9 as described below with reference to FIG. 2.

The upstream lip 201 of the nozzle 2 is configured so as to be brought into contact with a vertex 106 of the support section 101 of the nozzle 1 when the lip 201 is moved in a direction indicated by an arrow A in FIG. 2. Though a position adjusting mechanism for the nozzle 2 is not limited in particular, it is composed, for example, of an air cylinder 1001, a slide guide 1002, a stopper 1003, fine adjustment screw 1004, a table 1005 and a dial gauge 1006. After bringing the upstream lip 201 of the second nozzle 2 into contact with the vertex 106 of the first nozzle 1, the gap is set at d2 by fine adjustment screw 1004 while reading the dial gauge 1006.

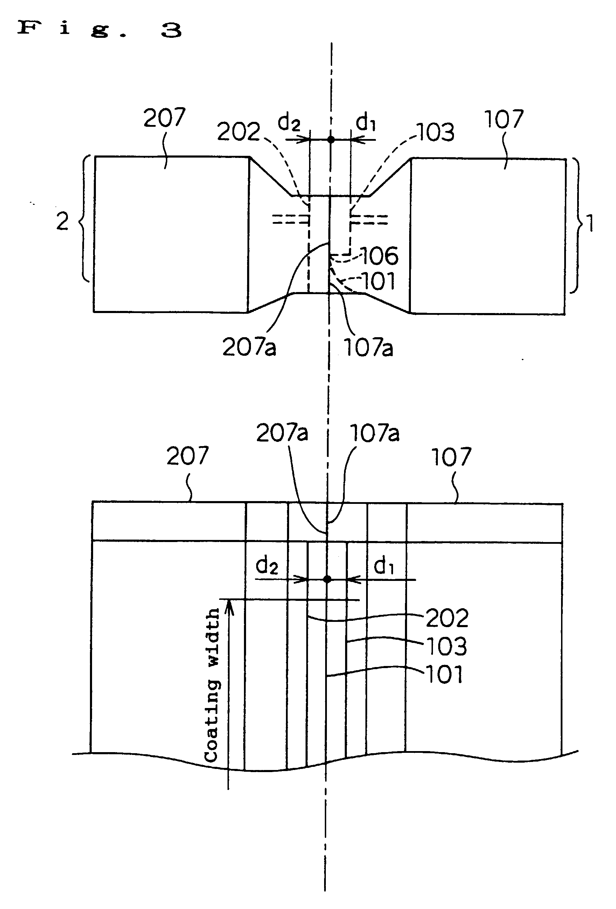

A configuration which is different from that shown in FIG. 2 may be adopted. As shown in FIG. 3, a tip 107a of a side block 107 of the first nozzle 1, for example, which is outside the coating width is made flush with the vertex 106 of the support section 101. In FIG. 3, an upper drawing is a side view of the first nozzle 1 and the second nozzle 2, whereas a lower drawing is a plan view of these nozzles.

The expression "the tip 107a of a side block 107 of the first nozzle 1 is made flush with the vertex 106 of the support section 101" means a fact that the tip 107a of the side block 107 and the vertex 106 of the support section 101 are set at the same height relative to the substrate 3.

Further, the gap between a tip 207a of a side block 207 of the second nozzle 2 and the downstream lip 202 is set at the size d2. This configuration is configured to coat both the surfaces of the substrate 3 at the same time while bringing the tips 107a and 207a of the side blocks 107 and 207 into contact with each other. When it is desired to form the coated films 8 and 9 so as to have the same thickness, d1 = d2 is to be adopted.

Characteristics of the embodiment A1 will be described in more detail.

A first characteristics of the embodiment A1 is that it is capable of maintaining the size d1 of the gap between the substrate 3 and the first nozzle 1, and the size d2 of the gap between the substrate 3 and the second nozzle 2 constant since the substrate 3 is slidably supported by the support section 101 at a location just before an outlet of the slit 105 of the first nozzle 1. Further, the embodiment A1 exhibits a remarkable effect of smoothing wrinkles formed on the substrate 3, thereby being capable of flattening the substrate 3 at the outlet of the slit 105 and that of the slit 204.

Accordingly, the embodiment A1 is capable of remarkably correcting the non-uniformity in thickness in the coating width direction and the substrate travelling direction of the coated film posed by the conventional coating apparatus, or forming coated films which are uniform on both surfaces at the same time as shown in FIG. 10(a). When sections from the slits to the downstream lips of the first nozzle 1 and the second nozzle 2 are configured so as to have the same form, conditions of coating by these two nozzles are equalized to each other, thereby making it possible to stably form coated films on both the surfaces at the same time.

Further, the embodiment A1 is capable of preventing air from being taken into the coated films 8 and 9 due to variations of the gaps between the outlets of the slits and the substrate, thereby providing the films 8 and 9 which are free from pinholes.

In order to obtain the effect described above, it is important to compose the coating apparatus as described below:

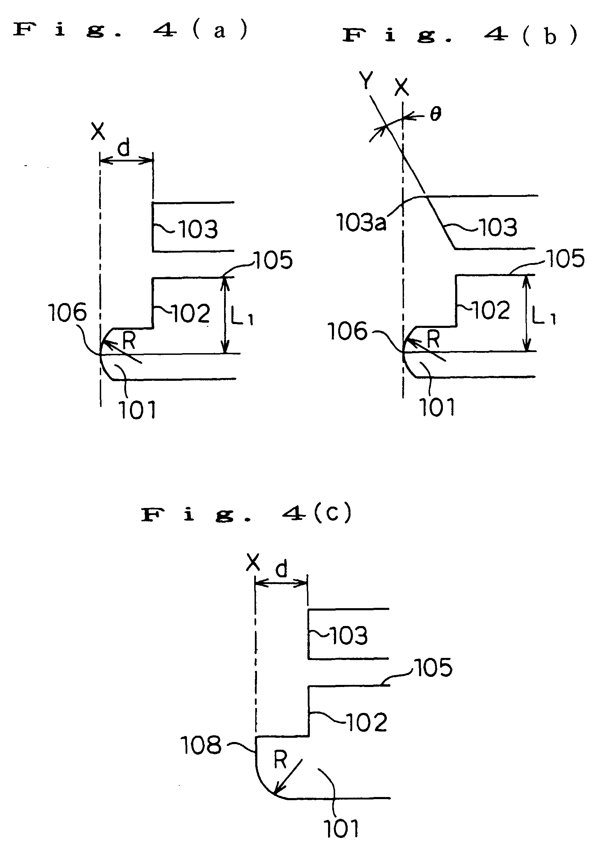

First, the support section 101 is composed so as to have a curved surface protruding toward the current collector 2, or a pair of a curved surface and a flat surface 108 as shown in FIG. 4(c). The curved surface has a radius of curvature R within a range of 2 mm $\leq$ R $\leq$ 300 mm. During the coating, the substrate is ordinarily subjected to a tension within a range of 50 to 500 g/cm. When the radius of curvature R is shorter than 2 mm, the substrate 3 is pressed to the support section 101 under too strong a tension and a travelling speed of the substrate 3 is varied due to friction, thereby making it impossible to form the coated films 8 and 9 so as to have uniform thickness. When the radius of curvature R exceeds 300 mm, in contrast, the substrate 3 is pressed to the support section 101 under too weak a tension and wrinkled in the direction of width of the substrate 3, thereby remarkably varying thickness of the coated films 8 and 9 in the width direction. Though a form of the upstream lip 102 is not limited in particular, it is extremely important to set a size L1 as measured from the slit outlet to the vertex 106 of the support section 101 (See FIGS. 1, 4(a), and 4(b)) within a range of 0.1 mm $\leq$ L1 $\leq$ 100 mm. More preferably, this size is set within a range of 0.1 mm $\leq$ L1 $\leq$ 10 mm. When L1 is shorter than 0.1 mm, the coating material reservoir T cannot be formed at the slit outlet and application of the coating material to the substrate 3 is disturbed, thereby making the coated films 8 and 9 non-uniform. When L1 is longer than 100 mm, the substrate 3 is once smoothed by the support section 101 but is wrinkled at the slit outlet in the width direction while travelling for the long distance, whereby thickness of the coated films 8 and 9 is remarkably varied in the width direction of the coated films 8 and 9. Further, a surface of the downstream lip 103 is directed so as to form an angle between the surface and a tangential line X on the vertex 106 of the support section 101, i.e., an angle $\theta$ shown in FIG. 4(b) within a range of $\pm30$ degrees. The positive angle is formed when a downstream end 103a of the downstream lip 103 is brought closest to the tangential line X and the negative angle is formed when the downstream end 103a of the downstream lip 103 is set farthest from the tangential line X. More preferably, angle $\theta$ is set so that the surface of the downstream lip 103 is nearly in parallel with the tangential line X as shown in FIG. 4(a). The embodiment A1 carries out the coating while adjusting the substrate 3 so as to travel in parallel with the tangential line X on the vertex 106 as shown in FIG. 4(a). When the angle $\theta$ deviates from the range of $\pm30$ degrees, thickness of coated films is made non-uniform in the width direction due to too large variations of the gap between the substrate 3 and the downstream lip 103. Within the range selected for the embodiment A1, thickness of coated films can be uniform.

Though the substrate 3 is adjusted so as to travel in parallel with the tangential line X in the embodiment A1, this adjustment is not limitative and the substrate 3 may be adjusted so as to form a definite angle of inclination relative to the tangential line X.

A second characteristic is a fact that the embodiment A1 which slidably supports the substrate 3 with the support section 101 at the location just before the slit outlet 105 of the first nozzle 1, and then carries out the coating while forming the coating material reservoir T between the slit outlet 105 and the substrate 3 (see FIG. 1) does not allow air to be mixed into the coating material reservoir T, thereby being capable of remarkably preventing pinholes from being produced. Air is not mixed into the coating material reservoir T for a main reason that the support section 101 is capable of eliminating an air layer which accompanies the coating material and exits on the substrate 3. Further, the small variations in the gaps having the sizes of d1 and d2 between the nozzles and the substrate in the space where the coating material reservoir T is formed can be considered as another reason. As a result, the embodiment A1 is capable of remarkably restricting the production of pinholes, which is a defect of the conventional coating apparatus.

A third characteristic is the fact that the embodiment A1, which can bring a portion of the upstream lip 201 of the second nozzle 2 into contact with the vertex 106 of the support section 101 of the first nozzle 1, is capable of setting the gap between the second nozzle 2 and the substrate 3 accurately at a definite size d2 in the coating width direction. Since the embodiment A1 slidably supports the substrate 3 with the support section 101 of the first nozzle 1, it allows the substrate 3 to travel stably while maintaining a fixed gap, thereby being capable of forming the coated film 9 with the second nozzle 2 so as to have thickness which is extremely uniform as compared with that of a coated film formed by the conventional coating apparatus. The embodiment A1 can exhibit a similar effect even when two surfaces are coated at the same time while the first and second nozzles 1 and 2 are kept in contact with each other outside the coating width shown in FIG. 3.

In addition to the characteristics described above, the embodiment A1 can exhibit effects for coating two surfaces at the same time as described below:

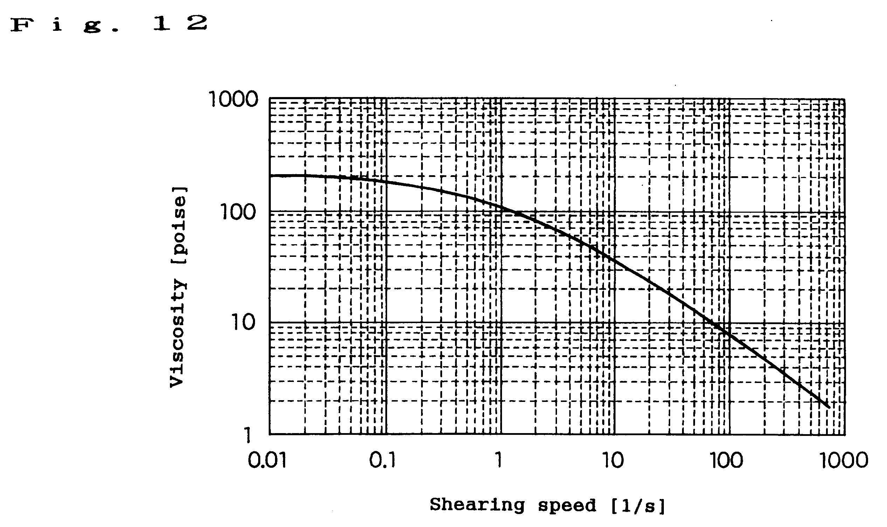

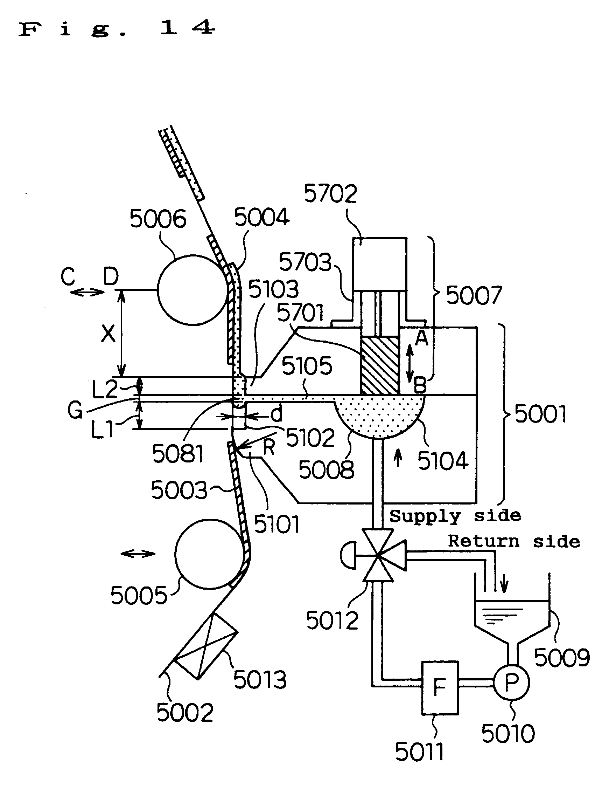

When the substrate 3 is to be coated with coating materials in intermittent patterns, the embodiment A1 uses a three-way valve which repeatedly supplies and stops supply of the coating materials 4 and 5 to the nozzles 1 and 2, and intermittent means which aspirates the coating materials out of the nozzles 1 and 2 by moving pistons disposed in the nozzles 1 and 2 (see FIG. 14). In this case, front and rear surfaces of the substrate 3 are to be coated with the coating materials at intermittent locations which correspond to each other. Since sizes L2 and L'2 of the downstream lips 103 and 202 (see FIG. 1) are closely related to starting and terminating ends of films coated intermittently, it is important to set the sizes within ranges of 0.1 mm$\leq$L2$\leq$5 mm and 0.1 mm$\leq$L'2$\leq$5 mm respectively. When L2 and L'2 are shorter than 0.1 mm, pastes 4 and 5 flowing between the downstream lips 103, 202 and the substrate 3 have low pressures, thereby allowing the coated films 8 and 9 to have non-uniform thicknesses. When L2 and L'2 are longer than 5 mm, the pastes 4 and 5 remaining between the downstream lips 103, 202 and the substrate 3 are stretched non-uniformly on the substrate 3 in the width direction at the terminating ends of the intermittent coating, thereby forming the so-called dull terminating ends. Used in the embodiment A1 were coating materials which have a rheology characteristic shown in FIG. 12.

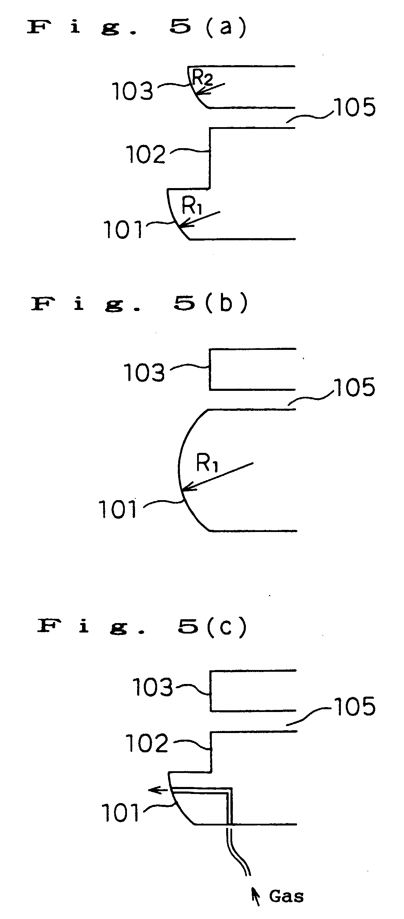

Further, the downstream lip 103 and the upstream lip 101 may have round edges or rectangular edges as shown in FIG. 5(a) or 5(b). Furthermore, it is possible to not bring the substrate 3 into contact with the support section 101 and to support it in a contactless condition by forming a gas injection port in the support section 101 as shown in FIG. 5(c) and injecting a gas from the gas injection port. Such a gas injection port makes it possible to reduce variations in thickness of coated films as well as breakage and slide resistance of the substrate 3.

Now, description will be given of an application example of the embodiment A1 to in manufacturing of a secondary lithium ion battery together with a comparative example using the conventional coating apparatus.

Nozzles 1 and 2 which had the shapes shown in FIG. 1 were selected in combination with R = 30 mm, $d1 = d2 = 200 \mu m$, L1 = six levels of 0.05, 0.1, 1, 10, 100, 120 mm, angle $\theta$ shown in FIG. 4 = five levels of +40 degrees, +30 degrees, zero degree, -30 degrees and -40 degrees, L2 = 3 mm, slit gap G1 = G2 = 0.5 mm and a coating width of 480 mm.

Selected for manufacturing a negative electrode was a current collector (substrate 3) which was composed of a copper foil 10 $\mu$m thick by 500 mm wide together with a paste for negative electrode which was prepared by mixing and kneading a carbon material, CMC and water. First, layers of an active substance were formed intermittently on both surfaces of the current collector at the same time at a predetermined pitch by the coating apparatus preferred as the embodiment A1 and dried.

Used for manufacturing a positive electrode was a current collector which was composed of an aluminium foil 20 $\mu$m thick by 500 mm wide in combination with a paste for positive electrode which was prepared by mixing and kneading $LiCoO_2$, an electrically conductive carbon black, a fluorine resin, CMC and water. Layers of an active substance were formed intermittently on both surfaces of the current collector at the same time at a predetermined pitch by the coating apparatus preferred as the embodiment A1 and dried.

On the other hand, coated films were formed on both surfaces of similar current collectors at the same time as a comparative example using the conventional coating apparatus.

Thicknesses of the positive electrode sheets and negative electrode sheets which were thus obtained were measured with a micrometer and variations in these thicknesses were compared.

Thereafter, conditions of the coated films were visually observed while rolling them to a predetermined thickness.

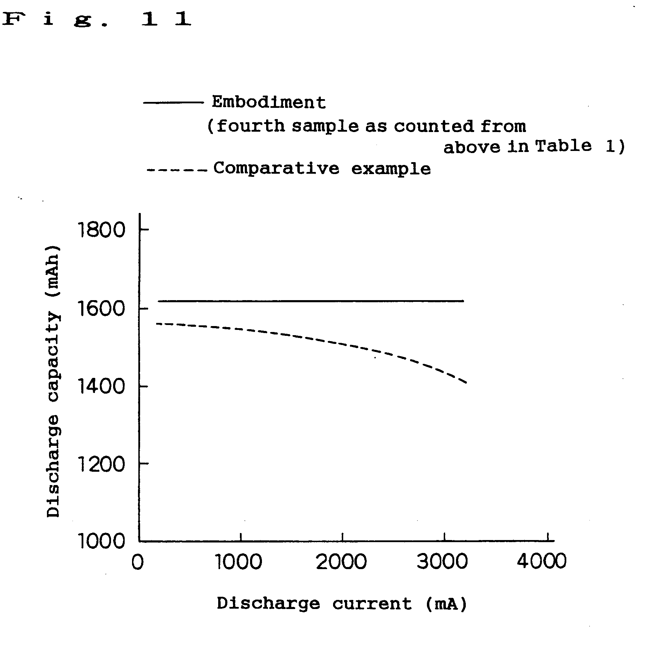

Further, the positive and negative electrode sheets were cut into belt-like pieces having a predetermined width and a predetermined length. Secondary lithium ion batteries were manufactured by rolling the cut pieces and the discharging capacities of these batteries were measured. The secondary batteries were charged by a constant current (160 mA) at normal temperature until a final voltage (4.2 V) was reached. After completing the charging, the secondary batteries were discharged at a constant current (160 mA to 3200 mA) and the discharging capacities from the start of discharging to a final voltage (3 V) were compared. Comparison results are summarized in Table 1 and FIG. 11.

Table 1

| L1 (mm) | $\theta$ (degrees) | Non-uniformity in thickness (%) | Rolled condition | Evaluation | Remarks |
|---|---|---|---|---|---|
| 0.05 | 0 | 8.2 | △ | × | Outside range of embodiment A1 |
| 0.1 | 0 | 1.5 | ○ | ○ | Within range of embodiment A1 |
| 1 | 0 | 0.3 | ○ | ○ | |
| 10 | 0 | 0.2 | ○ | ○ | |
| 100 | 0 | 1.8 | ○ | ○ | |
| 120 | 0 | 9.3 | △ | × | Outside range of embodiment A1 |
| 10 | - 40 | 12.1 | × | × | |
| 10 | - 30 | 1.4 | ○ | ○ | Within range of embodiment A1 |
| 10 | +30 | 1.7 | ○ | ○ | |
| 10 | +40 | 13.8 | × | × | Outside range of embodiment A1 |
| — | — | 10.2 | △ | × | Comparative example (conventional coating apparatus) |

Rolled condition
{
○ Rollable
△ Partially broken
× Broken
}

Evaluation
{
○ Favorable
× Unusable as battery
}

As long as L1 is within the range defined for the embodiment A1, it is possible to make uniform the thicknesses of coated films which are formed on both surfaces at the same time (see Table 1) and batteries manufactured by the embodiment A1 have discharging capacities which are clearly larger than those of the batteries manufactured in the comparative example (see FIG. 11).

This is considered to be due to the fact that the support section 101, along which the current collector slides, shields air accompanying the current collector, thereby restricting the air from being mixed into the coating material reservoir T more remarkably than with the conventional coating means and enhancing the density of the layer of active substance. As a result, the embodiment A1 is capable of enlarging the discharging capacity of a battery which is manufactured by the coating apparatus. Though concrete description has been given above of a secondary lithium ion battery, the present invention is capable of providing a similar effect for secondary nickel-hydrogen batteries, other batteries, capacitors and other products which require forming coated films on two surfaces at the same time.

In addition, the characteristic indicated by a solid line in FIG. 11 corresponds to values which are obtained by setting the size from the slit outlet to the vertex 106 of the support section 101 to L1 = 1 mm for the fourth sample as counted from above in Table 1 and setting the surface of the downstream lip 103 nearly parallel to the tangential line X on the vertex 106 of the support section 101 (θ = 0°).

(Embodiment A2)

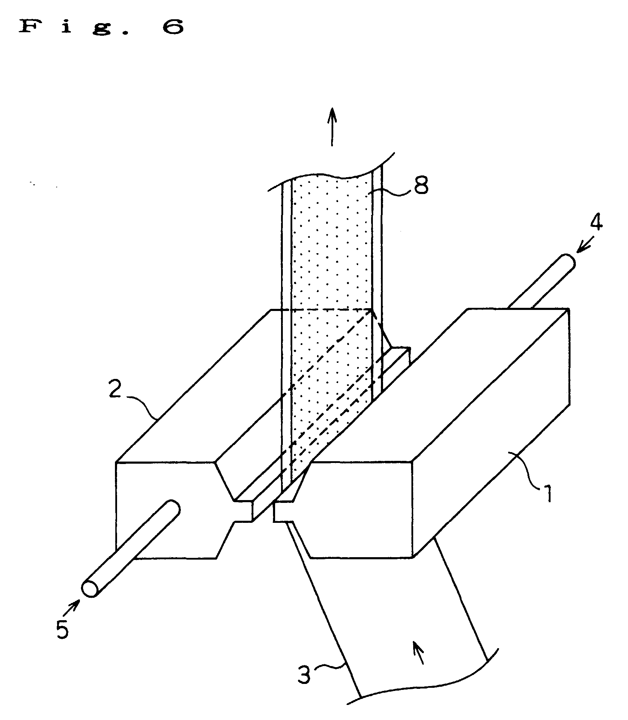

FIG. 6 is a schematic perspective view of a coating apparatus preferred as an embodiment A2 of the present invention.

The embodiment A2, in which a coating material supply direction to a nozzle 1 and a coating material supply direction to a nozzle 2 are substantially reversed with respect to each other, is capable of making uniform the total thicknesses of coated films formed in a coating width direction on locations on the front and rear surfaces of a substrate which correspond to each other. The embodiment A2 is the same as the embodiment A1 in other respects and will not be described in particular.

When a coating material is supplied sideways from a nozzle, it is normal for the hydrodynamic resistance of the coating material flowing through a manifold in the nozzle in the coating width direction to make the pressures relatively higher on the supply side and lower on an opposite side in the manifold. Accordingly, a coated film is thicker on the supply side, gradually thins out in the coating width direction and thin on the side opposite to the supply side.

The embodiment A2, which is configured to supply coating materials in different directions to the nozzles 1 and 2, is capable of making extremely uniform the total thickness of coated films formed on a front and rear surfaces at the same time, even though each film has thickness non-uniformity in the coating width direction Therefore, the embodiment A2 is capable of providing an effect which is similar to that of the embodiment A1.

(Embodiment A3)

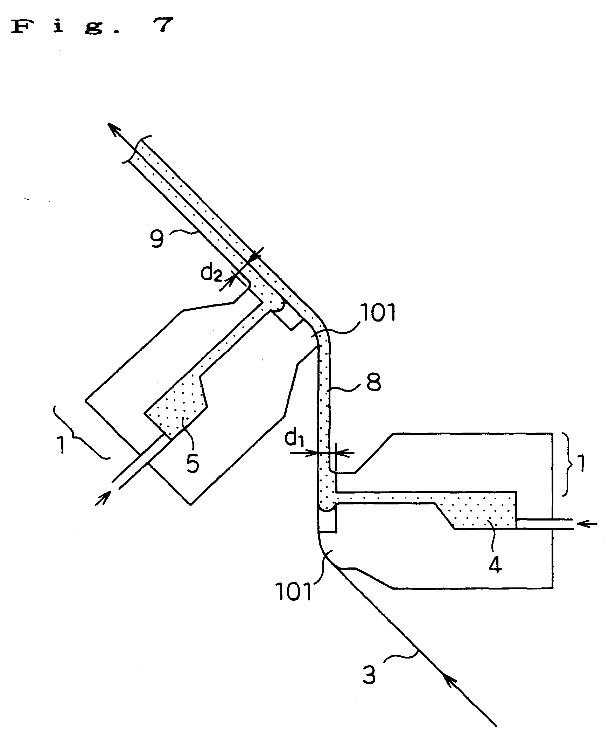

FIG. 7 schematically shows a coating apparatus preferred as an embodiment A3 of the present invention. The embodiment A3 is characterized in that it coats two surfaces at the same time with two nozzles which have the same form as that of the first nozzle 1 used in the embodiment A1, and are disposed at different locations relative to the front and rear surfaces of a substrate 3.

The embodiment A3 will not be described in particular in other respects since it can use the nozzle 1 and other members of the embodiment A1.

In the embodiment A3, a nozzle for forming a coated film 9 also slidably supports the substrate 3 with a support section 101 and is capable of eliminating an air layer accompanying the substrate 3. Accordingly, the embodiment A3 is capable of preventing pinholes from being produced not only in a coated film 8 but also in the coated film 9. When the embodiment A3 is applied to manufacturing of an electrode sheet for a battery, for example, it is capable of further enhancing the discharging capacity than is the embodiment A1. The embodiment A3 is capable of exhibiting other effects which are similar to those of the embodiment A1.

(Embodiment A4)

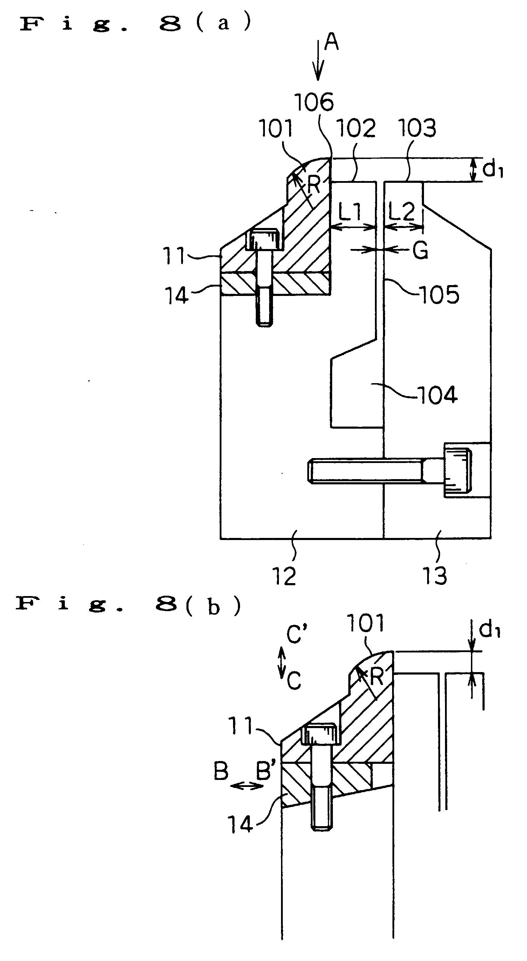

FIG. 8 schematically shows a coating apparatus preferred as an embodiment A4 of the present invention.

The embodiment A4 relates to a structure of a nozzle body and will not be described in other respects which are the same as those of the embodiment A1.

The embodiment A4 is characterized in that the nozzle body is composed of three blocks 11 through 13.

Speaking concretely, the nozzle body is composed of a first block 11 having a support section 101 which is formed on a tip thereof and has a nearly curved surface protruding toward a substrate to support a surface to be coated, a second block 12 which is capable of tightening the first block 11 and has an upstream lip 102 at a tip thereof adjacent to the support section 101, a third block 13 which has a downstream lip 103 formed at a tip thereof, a slit 105 and a manifold 104 which are formed between the second block 12 and the third block 13, and a spacer 14 which is disposed between the first block 11 and the second block 12 to adjust a step d1 between the support section 101 and the downstream lip 103.

It is preferable that the step d1 is usually set within a range from 5 to 1000 μm and adjustable appropriately dependently on the thickness of coated film for shortening the working time. In the embodiment A4, the step d1 can easily be set by inserting a spacer 14 having a thickness which is the same as the step d1 between the first block 11 and the second block 12 as shown in FIG. 8(a). When the spacer 14 is configured so as to have a tapered form as shown in FIG. 8(b), it is possible to optionally set the step d1 at an optional level by moving it in directions indicated by arrows B-B' and elevating the first block 11 in directions indicated by arrows C-C' in FIG. 8(b). Further, it is possible to perform fine adjustment by dividing the spacer 14 so as to make uniform the step d1 in the coating width direction. Effects which are similar to those of the embodiment A1 can be obtained by using the coating apparatus preferred as the embodiment A4.

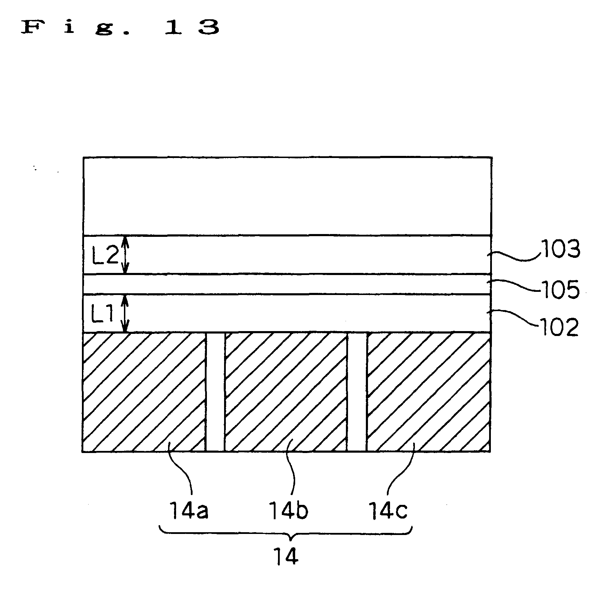

FIG. 13 shows a diagram descriptive of a case wherein the step d1 is made uniform by dividing the spacer 14 in the coating width direction. FIG. 13 is a schematic diagram of the nozzle body shown in FIG. 8(a) which is seen in a direction indicated by an arrow A in FIG. 8(a) and from which the first block 11 is removed. As shown in FIG. 13, the spacer 14 is divided into three pieces 14a through 14c.

(Embodiment A5)

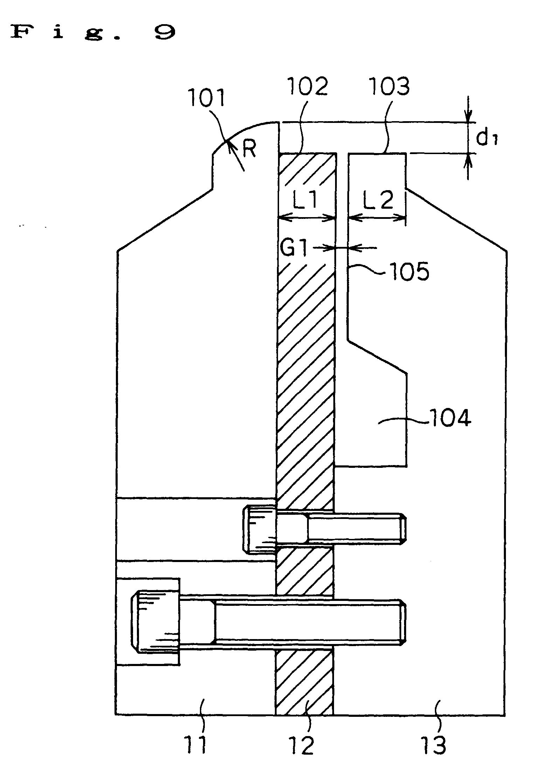

FIG. 9 shows a schematic sectional view illustrating a coating apparatus which is preferred as an embodiment A5 of the present invention.

The embodiment A5 relates to a structure of a nozzle body and will not be described in other respects which are the same as those of the embodiment A1.

The embodiment A5 is characterized in that the nozzle body is composed of a first block 11 having a support section 101 which is formed on a tip thereof and has a form of a nearly curved surface protruding toward a substrate to support a coated surface, a second block 12 which has a form of a plate and an upstream lip 102 formed on a tip thereof adjacent to the support section 101, a third block 13 which has a downstream lip 103 formed on a tip thereof, and a slit 105 and a manifold 104 which are formed between the second block 12 and the third block 13. A step d1 is usually set within a range from 5 to 1000 μm and appropriately adjusted dependently on the thickness of coated film. A size L1 of the upstream lip 102 is important since it defines the portion that forms a reservoir of a coating material supplied through the slit 105. As described with reference to the embodiment A1, L1 is set within a range of $0.1\ mm \le L1 \le 100$ mm, more preferably within a range of $0.1\ mm \le L1 \le 10\ mm$.

Since an optimum value of L1 is variable dependently on the kind of coating materials, it is preferable for the embodiment A5 to prepare a second block 12 in a plurality with different thicknesses L1 so that optimum sizes L1 are selectable for coating. Effects similar to those of the embodiment A1 are obtainable with the embodiment A5.

As understood from the foregoing description, the embodiments described above are capable of making uniform the thicknesses of coated films and preventing pinholes from being produced, thereby exhibiting remarkable effects to enhance performance of batteries and capacitors.

(Embodiment B1)

FIG. 14 shows a schematic diagram of a manufacturing system for battery electrodes with a coating apparatus which is preferred as an embodiment B1 of the present invention.

Description will be made of a configuration and operations of a system preferred as an embodiment B1 of the present invention and an embodiment of the coating method according to the present invention.

A nozzle 5001 is composed of a support section 5101 which slidably supports a surface to be coated of a current collector 5002, an upstream lip 5102, a downstream lip 5103, a manifold 5104 which forms a reservoir for a paste 5008 and a slit 5105 for extruding the paste 5008. Further, for coating active substance layers 5003 and 5004 intermittently at a predetermined pitch, an aspirator 5007 is composed of an air cylinder 5702 which moves a piston 5701 in a direction indicated by an arrow A or B and a jig 5703 which mounts the air cylinder 5702 on the nozzle 5001. A paste 5008 is supplied by a pump 5010 from a tank 5009 to the manifold 5104 of the nozzle 5001 through a filter 5011 and a three-way valve 5012, and extruded from the slit 5105. The current collector 5002 is supported between the support section 5101 and a guide roll 5006 so as to reserve a gap d from a tip of the downstream lip 5103. The paste 5008 extruded from the slit 5105 flows into the gap, thereby forming a paste reservoir 5081. While forming the paste reservoir 5081, the paste 5008 is coated as an active substance layer 5004 over the current collector 5002.

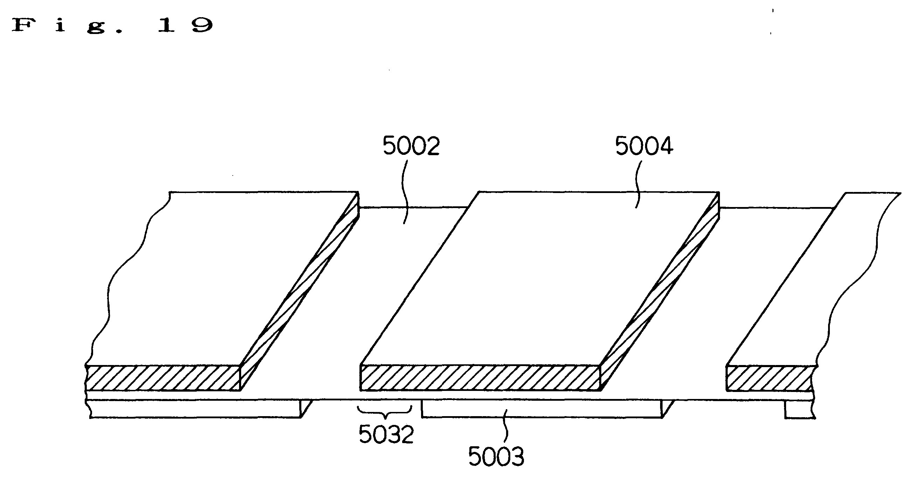

Accordingly, the manufacturing system is capable of forming coated films of the electrode sheets for batteries having a uniform thickness at a predetermined pitch from a starting end to a final end quite freely from influences due to active substance layers 5003 which have preliminarily been formed intermittently in the conventional example (see FIG. 20) and quite freely from portions 5032 where the active substance layers 5003 are not formed (see FIG. 19). The guide rolls 5005 and 5006 are configured so as to be capable of adjusting an angle of the current collector 5002 relative to the nozzle 5001. It is preferable that at least the guide roll 5006 which is located downstream the nozzle 5001 is movable in directions indicated by arrows C and D.

Here, description will be given mainly of operations to coat the paste 5008 on the current collector 5002 intermittently at a predetermined pitch.

To interrupt coating of the paste 5008, the three-way valve 5012 is turned to return a flow of the paste 5008 which is sent by the pump 5010 and the piston 5701 is moved in a direction indicated by an arrow A. The supply of the paste to the nozzle 5001 can be stopped by turning the three-way valve 5012 as described above, and the paste can be sucked from the slit 5105 and the paste reservoir 5081 by moving the piston 5701 as described above. These operations make it possible to intermittently coat the paste so as to have sharp final ends.

To restart the coating, the three-way valve 5012 is turned to switch the flow of the paste 5008 sent by the pump 5010 to the supply side for restarting supply of the paste to the nozzle 5001 and the piston 5701 is moved in a direction indicated by an arrow B to return the sucked paste into the nozzle.

Intermittent coating of the paste can be performed stably at a predetermined pitch by repeating these operations.

Needless to say, it is unnecessary to dispose a sucking device 5007 or the three-way valve 5012 when the active substance layers 5003 and 5004 are to be formed on the current collector 5002 not intermittently but continuously.

Further, it is preferable to dispose a cleaner 5013 which eliminates foreign matter from the surface to be coated of the current collector 5002 in any portions just before coating. The cleaner 5013 may be of any kind which presses a so-called fibrous or nonwoven cleaning wiper on the current collector 5002 or blasts clean air on the current collector 5002.

Here, a shape of a tip of the nozzle 5001 will be described in detail.

The support section 5101 has a shape of a curved surface protruding toward the current collector 5002 and a radius of curvature R within the range of 2 mm $\leq$ R $\leq$ 500 mm.

The current collector 5002 is composed mainly of a copper foil or an aluminium foil measuring 5 to 30 $\mu$m thick by 100 to 1000 mm wide and usually subjected to tension within a range from 50 to 500 g/cm. When the support section 5101 has a radius of curvature R shorter than 2 mm, the tension causes the current collector 5002 to be pressed to the support section 5101 under too strong a force and produces friction which varies the travelling speed of the current collector 5002, thereby making it impossible to form active substance layers 5003 and 5004 which have uniform thickness. When the support section 5101 has a radius of curvature R which is longer than 500 mm, the current collector 5002 is pressed to the support section 5101 under too weak a force and is allowed to be wrinkled in the current collector 5002 in the width direction, whereby thickness of the active substance layers 5003 and 5004 remarkably varies in the width direction and the travelling direction.

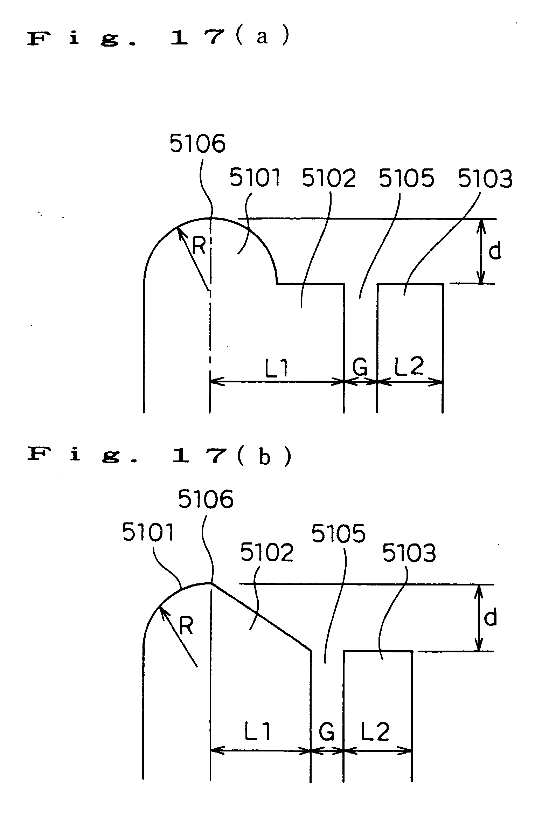

Though the shape of the upstream lip 5102 is not limited in particular, it is extremely important to set a size L1 as measured from the slit outlet to a vertex 5106 of the support section 5101 (see FIGS. 17(a) and 17(b)) within a range of 0.1 mm $\leq$ L1 $\leq$ 100 mm, more preferably within a range of 0.1 mm $\leq$ L1 $\leq$ 10 mm.

When L1 is shorter than 0.1 mm, it is impossible to form the paste reservoir 5081 at the slit outlet, thereby disturbing the coating of the paste 5008 over the current collector 5002, and making thickness of the active substance layers 5003 and 5004 non-uniform. When L1 is longer than 100 mm, in contrast, the current collector 5002 is apt to be wrinkled at the slit outlet in the width direction, thereby remarkably varying the thickness of the active substance layers 5003 and 5004 in the width direction.

A size L2 of the downstream lip 5103 is closely related to shapes of starting and final ends of coated films formed intermittently. It is important to set L2 within a range of 0.1 mm $\leq$ L2 $\leq$ 5 mm. When L2 is shorter than 0.1 mm, the paste 5008 which flows between the downstream lip 5103 and the current collector 5002 has a low pressure, thereby allowing the thickness of the active substance layers 5003 and 5004 to be non-uniform. When L2 is longer than 5 mm, the paste 5008 which remains between the downstream lip 5103 and the current collector 5002 is coated thinly on the current collector 5002 at the final coating ends in intermittent coating in particular, thereby posing a problem of degradation in performance of batteries.

The support section 5101 and the upstream lip 5102 may have shapes such as those shown in FIG. 17(a) or 17(b). These shapes may be optional as long as the support section 5101 has a shape which is capable of slidably supporting the current collector 5002 and the upstream lip has a shape to reserve a space sufficient for forming the paste reservoir 5081. It is important to configure the downstream lip 5103 so as to have a flat surface. A flat surface of the downstream lip 5103 exerts a strong shearing force to the paste 5008 which flows between the current collector 5002 and the downstream lip 5103 those shown in FIG. 17(a) or 17(b). These shapes may be optional so far as the support section 5101 has a shape which is capable of slidably supporting the current collector 5002 and the upstream lip has a shape to reserve a space sufficient for forming the paste reservoir 5081. It is important to configure the downstream lip 5103 so as to have a flat surface. A flat surface of the downstream lip 5103 is capable of exerting a strong shearing force to the paste 5008 which flows between the current collector 5002 and the downstream lip 5103, and breaking agglomerated lumps of the active substances dispersed in the paste, thereby making uniform the active substance layers 5003 and 5004. Further, a step d between the vertex 5106 of the support section 5101 and the downstream lip 5103 is usually set within a range of 5 $\mu$m $\leq$ d $\leq$ 1000 $\mu$m, though it is set appropriately depending on the thickness of the active substance layers 5003 and 5004 in their wet conditions. When it is desired to dispose thin anchor layers between the active substance layers and the current collector, for example, d is set within a range from 5 to 100 $\mu$m. To form active substance layers which are usually 100 to 100 $\mu$m thick in wet conditions, d is set within a range from 100 to 1000 $\mu$m which is nearly equal to the thickness of the active substance layers.

Now, description will be given of a concrete example of the embodiment B1.

A nozzle 5001 which had the form shown in FIG. 14 was selected in combination with R = 30 mm, d = 200 $\mu$m, L1 = 5 mm, L2 = 3 mm, slit gap G = 0.5 mm and a coating width of approximately 480 mm.

Used to form a negative electrode sheet was a current collector which was composed of a copper foil measuring 10 $\mu$m thick by 500 mm wide in combination with a paste for a negative electrode which was prepared by mixing and kneading a carbon material, CMC and water. First, active substance layers 5003 were formed intermittently at a predetermined pitch on the current collector by the embodiment B1 and dried. On a rear surface of the current collector, active substance layers 5004 were formed intermittently at the predetermined pitch at locations deviating from the active substance layers 5003 and dried. As a result, the active substance layers 5004 had a uniform thickness as shown in FIG. 19, quite free from influences due to areas 32 on which the active substance layers 5003 were not preliminarily formed intermittently.

Used to form a positive electrode sheet was a current collector which was composed of an aluminium foil measuring 20 $\mu$m thick by 500 mm wide in combination with a paste for positive electrode which was prepared by mixing and kneading an electrically conductive carbon black, a fluorine resin, CMC and water. First, active substance layers 5003 were formed on the current collector intermittently at a predetermined pitch by the embodiment B1 and dried. On a rear surface of the current collector, active layers 5004 were formed intermittently at the predetermined pitch at locations deviating from the active substance layers 5003 and dried. As a result, the active substance layer 5004 had a uniform thickness as shown in FIG. 19, quite free from influences due to areas 32 on which the active substance layers 5003 were not preliminarily formed intermittently.

After rolling the positive electrode sheet and the negative electrode sheet until they had a predetermined thickness, the electrode sheets were slit at a predetermined width and a secondary lithium ion battery was manufactured.

As a comparative example, active substance layers 5003 were formed by means of the conventional coating method with the paste mentioned above on a current collector intermittently at a predetermined pitch and dried. On a rear surface of the current collector, active substance layers 5004 were formed intermittently at the predetermined pitch at locations deviated from the active substance layers 5003 and dried. In this example, a large amount of air was mixed into the active substance layers 5004 which were formed at areas on which the active substance layers 5003 were not formed, thereby making the current collector having these active substance layers unusable as an electrode sheet. A secondary lithium ion battery was manufactured as a comparative example by coating a current collector with the paste mentioned above continuously by the conventional coating method without using an intermittent means, eliminating an active substance layer thus formed at a predetermined pitch, rolling an electrode sheet thus obtained until it has a predetermined thickness, and slitting it at a predetermined width.

The batteries which were described above were evaluated as described below for confirming the effects of the embodiment B1.

(1) Discharge capacities

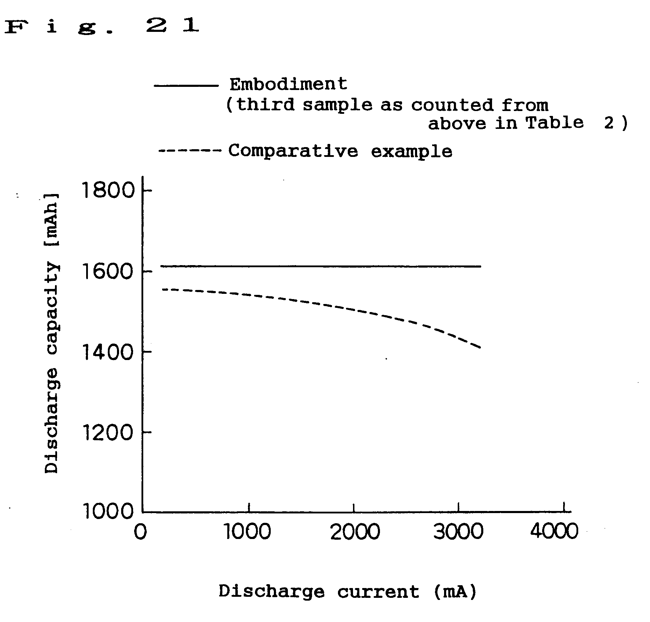

The secondary batteries were charged at a constant current (160 mA) at normal temperature until an end voltage (4.2 V) was reached and then discharged at a constant current (160 mA to 3200 mA) until the voltage dropped to an end level (3 V) to compare discharge capacities of the batteries. Evaluation results are shown in FIG. 21. The battery manufactured by the embodiment B1 has a discharge capacity which is clearly larger than that of the battery manufactured by the conventional example.

A solid line shown in FIG. 21 represents values of a third sample as counted from above in Table 2 which was manufactured with a distance as measured from the current collector 5002 to the outlet of the slit 5105 set at 200 $\mu$m and the distance as measured from the guide roll 5006 to the slit outlet at 0.1 mm.

(2) Cycle characteristic

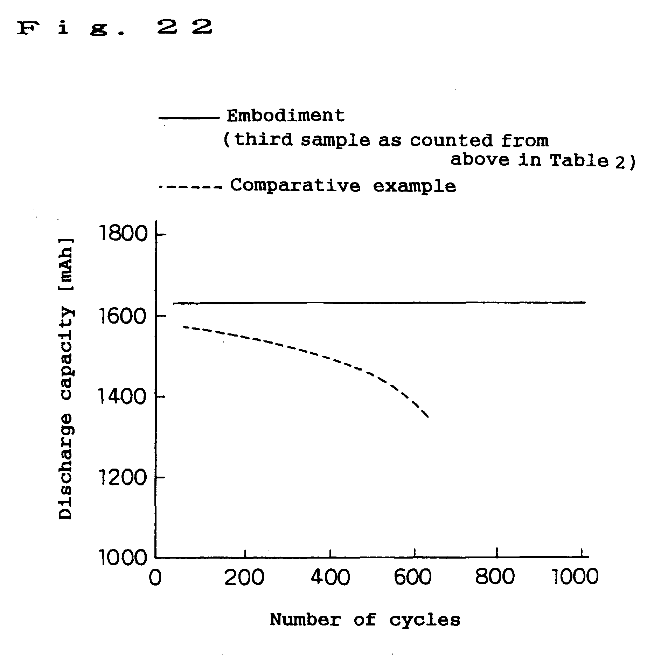

Discharge capacities were measured by repeating charging and discharging in definite conditions (current 1600 mA and end voltage 3 V for discharging, current 160 mA and end voltage 4.2 V for charging) at normal temperature and discharge cycles till 90% of an initial discharge capacities were compared. The compared results are shown in FIG. 22. The battery manufactured by the embodiment B1 has a cycle characteristic which is clearly higher than that of the battery manufactured by the conventional example.

Characteristics of the embodiment B1 which were confirmed by the evaluation are described below:

First, the embodiment B1 is capable of forming the active substance layers 5004 intermittently at an optional pitch quite free from influences due to the areas on which the active substance layers 5003 are not formed by preliminarily forming the active substance layers 5003 on a current collector intermittently at an optional pitch and then forming the active substance layers 5004 on a rear surface of the current collector. The embodiment B1, which allows intermittent coating of a paste at locations on front and rear surfaces which was impossible with the conventional coating means, thereby makes it possible to remarkably enhance productivity and reduce loss of expensive active substances in production lines of secondary lithium ion batteries and so on.

Secondly, the support section 5101 along which the current collector 5002 slides intercepts air accompanying the current collector 5002. Accordingly, the embodiment B1 is capable of remarkably reducing the amount of air to be mixed into the paste reservoir 5081 as compared with the conventional coating means, thereby enhancing densities of active substance layers. As a result, the embodiment B1 is capable of enlarging discharge capacities of batteries manufactured thereby.

Thirdly, the embodiment B1 is capable of exerting a strong shearing force on a paste which flows between the surface of the downstream lip 5103 and the current collector 5002, and breaking up agglomerated lumps of active substance powder, thereby providing active substance layers in which the active substance powder is dispersed uniformly. Accordingly, the embodiment B1 is capable of enhancing cycle characteristics of batteries manufactured thereby.

(Embodiment B2)

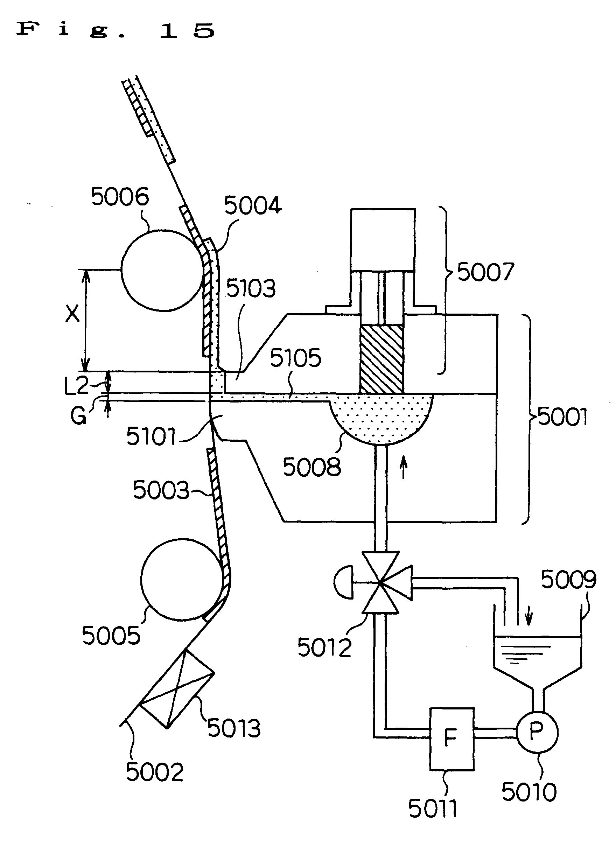

FIG. 15 shows a schematic sectional view of a battery using electrode sheets of an embodiment B2 of the manufacturing system using coating apparatus according to the present invention.

The embodiment B2 is characterized in that a tip of a nozzle 5001 is composed of a support section 5101 and a downstream lip 5103 without using the upstream lip 5102 which is adopted for the embodiment B1. The embodiment B2 is the same as the embodiment B1 with other respects.

The embodiment B2 in which a paste 5008 which is discharged from a slit 5105 is coated directly onto a current collector 5002 is capable of forming an active substance layer 5004 having a uniform thickness quite freely from influences due to wrinkles of the current collector 5002 and variations in travel. The embodiment B2 provides effects which are quite similar to those of the embodiment B1.

(Embodiment B3)

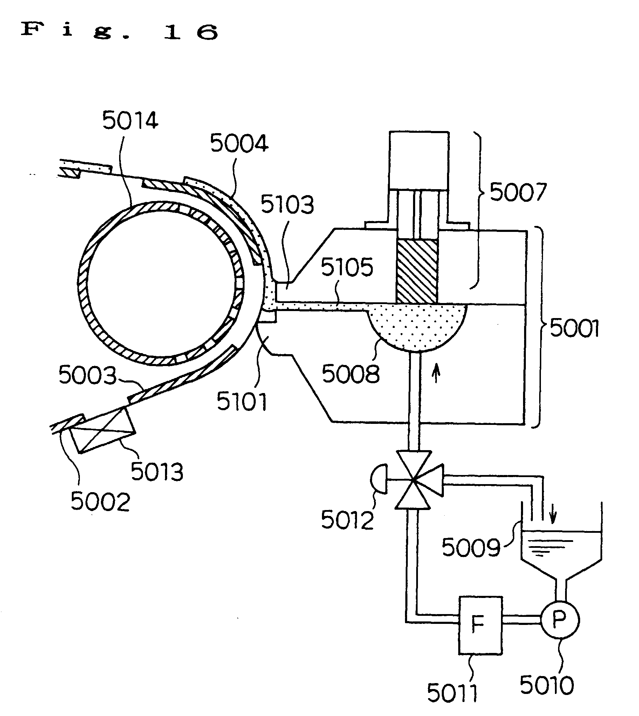

FIG. 16 shows a schematic sectional view of a battery using electrode sheets of an embodiment B3 of the manufacturing system using the coating apparatus according to the present invention.

A greatest characteristic of the embodiment B3 lies in a fact that it uses a floating device 5014 which is disposed at a location opposed to a nozzle 5001 and functions to make a current collector 5002 float up using a gas. The configuration of nozzle 5001 may be that of which is used in the embodiment B1 or B2 and will not be described in particular.

The current collector 5002 is floated up by a gas which is injected from the floating device 5014 as shown in FIG. 16 while balancing the pressure of the gas with a tension applied to the current collector 5002. The current collector 5002 is floated up on the order of 1 mm from the surface of the floating device 5014 while adjusting the injection rate of the gas so as to balance its pressure with the tension applied to the current collector 5002, which is usually 50 to 500 g/cm. While keeping the surface to be coated of the floated current collector 5002 in contact with a support section 5101 of the nozzle 5001, a paste 5008 is discharged from a slit 5105 to the current collector 5002.

Accordingly, the embodiment B3 is capable of forming active substance layers 5004 quite free from influences due to active substance layers 5003 which have preliminarily been formed intermittently at a predetermined pitch. An electrode sheet for batteries having a thickness which was uniform from the starting end to the final end as shown in FIG. 19 was obtained by coating the current collector 5002 with the paste described with reference to the embodiment B1 using the manufacturing system preferred as the embodiment B3 so as to form the active substance layers 5004 intermittently at locations deviating from the active substance layers 5003. The embodiment B3 exhibited effects which were quite similar to those of the embodiment B1.

(Embodiment B4)

FIG. 14 shows a schematic sectional view illustrating a system for executing a manufacturing method for a battery electrode of an embodiment B4 of the coating method according to the present invention.

The system for executing the embodiment B4 of the coating method according to the present invention has a configuration which is quite the same as the embodiment B1 and will not be described in particular.

The embodiment B4 comprises a first step to form active substance layers 5003 on a surface of a travelling current collector 5002 intermittently at a predetermined pitch and a second step to form active substance layers 5004 on the other surface of the current collector 5002 intermittently at the predetermined pitch at locations deviated from those of the active substance layers 5003. At least at the second step, coating is carried out while supporting a surface to be coated of the current collector 5002 at a location just before an outlet of a slit 5105 of a nozzle 5001.

This method makes it possible to obtain an electrode sheet for batteries having active substance layers which are formed at a predetermined pitch and have a thickness that is uniform from starting end to final end thereof, as shown in FIG. 19, quite free from influences due to the preliminarily formed active substance layers 5003 and those due to areas 32 at which the active substance layers 5003 are not formed.

Characteristics of the embodiment B4 will be detailed below:

A first characteristic lies in that the embodiment B4 coats the current collector 5002 with the paste 5008 discharged from the slit 5105 while forming the reservoir 5081 in a space between the support section 5101 and the slit 5105, or beside an upstream lip 5102. The paste reservoir 5081 serves to prevent the coating from being disturbed by positional variations of the current collector 5002 in a direction toward the nozzle, and makes uniform the thicknesses of the active substance layers 5003 and 5004 regardless of positional variations in the current collector in the direction toward the nozzle.

A second characteristic lies in that the embodiment B4 maintains the distance as measured from the current collector 5002 to the outlet of the slit 5105 within a range from 10 to 1000 $\mu$m. When the distance is shorter than 10 $\mu$m, the current collector 5002 is pressed to the paste reservoir 5081 under too strong a pressure and the paste reservoir 5081 cannot be formed stably, thereby making the thicknesses of the active substance layers non-uniform. When the distance is longer than 1000 $\mu$m, in contrast, the current collector 5002 is pressed to the paste reservoir 5081 under too weak a pressure and the paste reservoir 5081 cannot be found stably, thereby also making the thicknesses of the active substance layers non-uniform.

A third characteristic lies in that the embodiment B4 is configured to allow the current collector 5002 to travel at an angle within a range of $\pm$45 degrees, more preferably within a range of $\pm$30 degrees relative to the flat surface of the downstream lip 5103. A guide roll 5006 is movable in directions indicated by arrows C and D to adjust the angle of the current collector 5002 relative to the nozzle 5001. Accordingly, the embodiment B4 is capable of exerting a strong shearing force to paste which flows between the surface the downstream lip 5013 and the current collector 5002 and breaking up agglomerated lumps of active substance powder contained in the paste, thereby forming active substance layers in which the active substance powder is dispersed uniformly.

A fourth important characteristic of the embodiment B4 lies in that a distance X as measured from a center of the guide roll 5006 which is downstream the nozzle 5001 in a travelling direction of the current collector to a downstream edge of the downstream lip 5103 of the nozzle 5001 is within a range from 0.01 to 10 m. The guide roll 5006 has a radius within a range from 5 to 500 mm in the embodiment B4. When the distance X is shorter than 0.01 m, the thickness of the active substance layers 5004 is non-uniform under influences due to steps between areas on which the active substance layers 5003 are formed intermittently and areas on which the active substance layers 5003 are not formed. When the distance X is longer than 10 m, in contrast, the current collector 5002 is wrinkled over an area which covers the downstream lip, thereby making the thickness of the active substance layers 5004 non-uniform.

A fifth characteristic lies in that the embodiment B4 limits the tension applied to the current collector 5002 within a range from 50 to 500 g/cm. The support section 5101 has a curved surface which protrudes toward the current collector 5002. When the tension exceeds 500 g/cm, it causes the current collector 5002 to be pressed to the support section 5101 under too strong a pressure, thereby allowing friction to vary the travelling speed of the current collector 5002, and making it impossible to form the active substance layers 5003 and 5004 so as to have uniform thicknesses. If the tension is lower than 50 g/cm, in contrast, the current collector 5002 is pressed to the support section 5101 under too weak a pressure and wrinkled in the width direction, thereby allowing the thickness of the active substance layers 5003 and 5004 to be remarkably varied in the width direction.

To coat and form active substance layers intermittently at a predetermined pitch, the embodiment 84 repeats a coating step to coat the current collector 5002 with paste 5008, and a coating stop step to stop supplying the paste 5008 to the nozzle 5001 and suck a portion of the paste 5008 out of the nozzle with a sucking device 5007. These steps are the same as the operations of the embodiment B1 and will not be described in particular.

Now, description will be given of a concrete example of the embodiment B4.

A nozzle 5001 which had the form shown in FIG. 14 was selected in combination with settings of R = 30 mm, d = 200 $\mu$m, L1 = 5 mm, L2 = 3mm, a slit gap G = 0.5 mm and a coating width of 480 mm. The tension to a current collector was set at 150 g/cm, a distance as measured from the current collector to an outlet of a slit was varied within a range from 5 to 1100 $\mu$m and a distance X as measured from a guide roll 5006 to an edge of the downstream of downstream lip 5103 was varied within a range from 0.05 to 11 m.

Used as materials for a negative electrode sheet were a current collector which was made of a copper foil

measuring 10 μm thick by 500 mm wide, and a paste for negative electrode which was prepared by mixing and kneading a carbon material, CMC and water. First, active substance layers 5003 were formed by coating the current collector with the paste intermittently at a predetermined pitch by the method preferred as the embodiment B4 and dried. Then, active substance layers 5004 were formed on a rear surface of the current collector by coating it with the paste intermittently at the predetermined pitch at locations deviated from locations of the active substance layers 5003.

Selected as materials for a positive electrode sheet were a current collector which was composed of an aluminium foil measuring 20 μm thick by 500 mm wide, and a paste for positive electrode which was prepared by mixing and kneading $LiCO_2$, an electrically conductive carbon black, a fluorine resin, CMC and water. First, active substance layers 5003 were formed by coating the current collector with the paste for positive electrode intermittently at the predetermined pitch by the method preferred as the embodiment B4 and dried. Then, active substance layers 5004 were formed on a rear surface by coating it with the paste intermittently at the predetermined pitch at locations deviating from the active substance layers 5003.

After the positive and negative electrode sheets were rolled to a predetermined thickness and slitted at a predetermined width, a secondary lithium ion battery was manufactured.

To prepare a comparative example, active substance layers 5003 were formed on a current collector by coating a current collector with the paste described intermittently at the predetermined pitch by the conventional coating method and drying the paste, and then active substance layers 5004 were formed on a rear surface of the current collector by coating it with the paste intermittently at the predetermined pitch at locations deviated from those of the active substance layers 5003 and drying the paste. In this case, a large amount of air was mixed into areas on which the active substance layers 5003 were not formed, whereby the current collector was unusable as an electrode sheet. Therefore, a secondary lithium ion battery was manufactured by coating a current collector with the paste described above continuously by the conventional method without using an intermittent means, removing an active substance layer at the predetermine pitch, rolling the layer to the predetermined thickness and slitting the current collector at the predetermined width.

The electrode sheets and batteries which were obtained after the coating and drying were evaluated as described below for confirming effects of the embodiment B4.

(1) Non-uniformity in thickness of active substance layers 5004

Thicknesses of the active substance layers 5004 were measured at 50 locations thereof with a micrometer, and differences in maximum thicknesses and minimum thicknesses from average values were evaluated as thickness variations. Evaluation results are summarized in Table 2. It is apparent from this table that distance settings within the ranges defined in the embodiment B4 make it possible to reduce variations in thickness and obtain favorable electrode sheets for batteries.

Table 2

| Distance between current collector and slit outlet $\mu$ m | Distance X between guide roll and slit outlet m | Non-uniformity in thickness % | Evaluation | Remarks |
|---|---|---|---|---|
| 5 | 0.1 | 15.3 | × | Outside range of embodiment B4 |
| 10 | 0.1 | 2.2 | ○ | Within range of embodiment B4 |
| 200 | 0.1 | 0.5 | ◎ | |
| 1000 | 0.1 | 3.1 | ○ | |
| 1100 | 0.1 | 12.4 | × | Outside range of embodiment B4 |
| 200 | 0.05 | 18.5 | × | |
| 200 | 0.01 | 2.3 | ○ | Within range of embodiment B4 |
| 200 | 10 | 1.8 | ○ | |
| 200 | 11 | 10.1 | × | Outside range of embodiment B4 |
| — | — | 19.3 | × | Comparative example (conventional coating apparatus) |

Evaluation
◎ Extremely favorable
○ Favorable
× Unusable

(2) Discharging capacity

Discharging capacities were compared by charging the secondary batteries at a constant current (160 mA) until a final voltage (4.2 V) was reached and then discharging them at constant currents current (from 160 mA to 3200 mA) until a final voltage (3 V) was reached. Comparison result is shown in FIG. 21. The battery which was manufactured by the embodiment B4 has a discharging capacity which is clearly enlarger than that of the battery manufactured by the conventional method.

In FIG. 21, the solid line represents a characteristic of a battery using electrode sheets which are uniform in coating thicknesses thereof free from pinholes, whereas the dashed line designates a characteristic of a battery using electrode sheets which are non-uniform in coating thicknesses and have pinholes.

As seen from the characteristics represented by the solid lines in FIGS. 11 and 21, the different samples which were manufactured using the same materials in positive electrodes and negative electrodes but in different conditions and by different methods can have coating thickness that are uniform, reduced numbers of pinholes and enlarged discharge capacities. Further, dashed lines in FIGS. 11 and 21 represent a characteristic of the same sample.

(3) Cycle characteristic

Discharging capacities were measured by the cycle of repeating charging and discharging at normal temperature under fitted conditions (current 1600 mA, end current 3V for charging and current 160 mA and end voltage 4.2 V for discharging), and numbers of charges and discharges (cycles) were compared when discharge capacities dropped to 90% of initial discharge capacities. Comparison results are shown in FIG. 22. The battery manufactured by the embodiment B4 had a cycle characteristic which was clearly larger than that of the conventional example.

Characteristics of the embodiment B4 clarified by the evaluation are summarized below:

First, the embodiment B4 is capable of forming, after prelimiraily forming the active substance layers 5003 on the current collector intermittently, the active substance layers 5004 on the rear surface of the current collector intermittently at an optional pitch quite free from influences due to areas on which the active substance layers are not formed. Further, the embodiment B4 is capable of forming the active substance layers so as to have extremely uniform thicknesses. Since the embodiment B4 is capable of performing the intermittent coating at locations on front and rear surfaces deviating from one another which is unavailable by the conventional coating means, the embodiment B4 permits a leap in productivity and remarkably reduces loss of expensive active substances in production lines of secondary lithium ion batteries and so on.

Secondly, the embodiment B4, which slides the current collector 5002 along the support section 5101, intercepts air accompanying the current collector 5002 with the support section 5101. Accordingly, the embodiment B4 is capable of remarkably reducing the amount of air to be mixed into the paste reservoir 5081 compared to the coating means, thereby enhancing densities of the active substance layers. As a result, the embodiment B4 is capable of enlarging the discharge capacities of batteries manufactured thereby.

Thirdly, the embodiment B4 is capable of exerting a strong shearing force on the paste which flows between the surface of the downstream lip 5103 and the current collector 5002 and breaking up agglomerated lumps of the active substance powder contained in the paste, thereby providing active substance layers in which the active substance powder is dispersed uniformly. As a result, the embodiment B4 is capable of enhancing the cycle characteristics of batteries manufactured thereby.

As described above, the embodiment B4 is capable of forming active substance layers intermittently at a predetermined pitch on front and rear surfaces at locations deviating from one another, thereby permitting a leap productivity and remarkable reductions in loss of expensive active substances in production lines for secondary lithium ion batteries and so on.

Further, the embodiment B4 is capable of remarkably reducing the amount of air to be mixed into a paste as compared with the conventional coating method, thereby enhancing densities of active substance layers and enlarging discharge capacities of batteries.

Furthermore, the embodiment B4 is capable of forming active substance layers in which active substance powders are dispersed uniformly, thereby enhancing cycle characteristics of batteries.

Moreover, the configuration of the nozzle 5001 which is described with reference to the embodiment B4 may be the one shown in FIG. 8 or 9.

Though the embodiment B4 described above is configured to coat the front and rear surfaces of the substrate with coating materials, this configuration is not limitative and the configuration may be modified to coat only one surface with a coating material.

As apparent from the foregoing description, the present invention provides an advantage of forming coated films so as to have more uniform thicknesses. In addition, the present invention provides another advantage of reducing the number of pin holes to be generated in coated films.

**Claims**

1. A coating apparatus comprising:

   a first nozzle means having (1) a discharge section for discharging a coating material on a substrate travelling in a predetermined direction and having a surface which is not coated, and (2) a support section which is fixed upstream of said discharge section in the travelling direction of said substrate as standard and has a support surface to support said surface which is not coated directly or indirectly; and
   a guide means which guides said substrate so that said surface which is not coated is pressed directly or indirectly on said support surface.

2. A coating apparatus according to claim 1,
   wherein said guide means is a guide roll which is disposed upstream of said support section,
   wherein said substrate has two surfaces which are not coated, and
   wherein said coating apparatus comprises a second nozzle means which is opposed to said first nozzle means is and used to apply a coating material to a surface which is not coated and is located on a side opposite to the surface to be coated by said first nozzle means.

3. A coating apparatus according to claim 1,
   wherein said guide means is disposed upstream of said support section,
   wherein said substrate has two surfaces which are not coated,
   wherein said coating apparatus comprises a second nozzle means which is disposed at a location downstream of said first nozzle means and is used to coat a coating material on a second surface which is not coated and is located on a side opposite to the surface to be coated by said first nozzle means, and
   wherein said second nozzle means has a second support section which comprises (1) a second discharge section which discharges a coating material to the second surface which is not coated of said substrate, and (2) a second support section having the second support surface which is fixed upstream of said second discharge section in the travelling direction of said substrate as standard, and supports directly or indirectly said second surface which is not coated.

4. A coating apparatus according to claim 1,
   wherein said substrate has two surfaces which are not coated,
   wherein said coating apparatus comprises a second nozzle means which is disposed at a location upstream of said first nozzle means and used to apply a coating material to a surface which is not coated and is located on a side opposite to the surface to be coated by said first nozzle means, and
   wherein said guide means is a device which is disposed at a location opposed to said support section and blasts a gas on the surface opposed to the surface which is not coated of said substrate, for making said substrate float up so that said surface which is not coated is pressed directly onto said support surface or guide roll which is disposed upstream of said support section.

5. A coating apparatus according to claim 1,
   wherein said coating material is a paste of an active substance for battery electrodes.

6. A coating apparatus according to claim 2,
   wherein a coating material is supplied to said first nozzle means in a predetermined direction taking the width direction of said substrate as standard and a coating material is supplied to said second nozzle means in a direction different from said predetermined direction.

7. A coating apparatus according to claim 2,
   wherein said coating apparatus comprises an adjustment means which adjusts a gap between said second nozzle means and said substrate.

8. A coating apparatus according to claim 2,
   wherein a portion of a lip upstream of said second nozzle means can be brought into contact with a vertex of said support section of the first nozzle means.

9. A coating apparatus according to claim 2,
   wherein said first nozzle means and said second nozzle means can be brought into contact with each other outside a coating width of said substrate.

**10.** A coating apparatus according to any one of claims 1 through 5,
wherein said discharge section is composed, in order from an upstream side, of the upstream lip, a slit which is an outlet for a coating material and a downstream lip.

**11.** A coating apparatus according to claim 10,
wherein an angle within a range of ±30 degrees is formed between a surface of said downstream lip and a surface of said substrate.

**12.** A coating apparatus according to any one of claims 1 through 5,
wherein said support section is a curved surface or a combination of a curved surface and a flat surface protruding toward said substrate.

**13.** A coating apparatus according to any one of claims 1 through 5 satisfying the following condition:

$$2 \text{ mm} \leq R \leq 300 \text{ mm}$$

wherein the reference symbol R represents a radius of curvature of said support section.

**14.** A coating apparatus according to claim 10 satisfying the following condition:

$$5 \ \mu m \leq d1 \leq 1000 \ \mu m$$

wherein the reference symbol d1 represents a gap between a tangential line on a vertex of said support section and said downstream lip.

**15.** A coating apparatus according to any one of claims 1 through 5 satisfying the following condition:

$$0.1 \text{ mm} \leq L1 \leq 100 \text{ mm}$$

wherein the reference symbol L1 represents a distance as measured from a lower end of a coating material outlet of said discharge section to a vertex of said support section.

**16.** A coating apparatus according to claim 10 satisfying the following condition:

$$0.1 \text{ mm} \leq L2 \leq 5 \text{ mm}$$

wherein the reference symbol L2 represents a length of said downstream lip in the travelling direction of said substrate.

**17.** A coating apparatus according to any one of claims 1 through 5,
wherein said coating apparatus comprises:

a three-way valve which repeats supply and stop of a coating material to and from said nozzle means; and
a sucking means which sucks said coating material inside of said nozzle means by moving a piston disposed in said nozzle means.

**18.** A coating apparatus according to any one of claims 1 through 5,
wherein said discharge section is composed of a slit and a downstream lip.

**19.** A coating apparatus according to claim 18,
wherein said downstream lip is a curved surface or a flat surface.

**20.** A coating apparatus according to any one of claims 1 through 5,
wherein a plurality of slots or slits which inject a gas are formed in said support section, and
wherein said support surface which supports said surface which is not coated indirectly by way of injection of said gas.

**21.** A coating apparatus according to any one of claims 1 through 5,
wherein a coating material reservoir is formed between said support section and a slit outlet of said discharge section for said coating material.

**22.** A coating apparatus according to any one of claims 1 through 5,
wherein said nozzle means comprises:

a first block which has said support section formed on a tip thereof;
a second block which tightens said first block and has an upstream lip formed at a location adjacent to said support section;
a spacer which is disposed between said first block and said second block for adjusting a protruding length of said support section;
a third block which has a downstream lip formed at a tip thereof;
a slit which is formed between said second block and said third block as an outlet for said coating material; and
a manifold which communicates with said slit.

**23.** A coating apparatus according to claim 22,
wherein said spacer is divided in the coating width direction of a surface to be coated of said substrate.

**24.** A coating apparatus according to any one of claims 1 through 5,
wherein said nozzle means comprises:

a first block which has said support section formed at a tip thereof;
a second block which has a plate-like form and an upstream lip formed at a tip thereof and adjacent to said support section;
a third block which has a downstream lip formed at a tip thereof;
a slit which is formed between said second block and said third block as an outlet for said coating material; and
a manifold which communicates with said slit.

**25.** A coating method comprising:

a support step to directly or indirectly support a surface which is not coated of a substrate travelling in a predetermined direction; and
a first coating step to apply a first coating material to said surface which is not coated,
wherein said support at said support step is performed by taking said travelling direction as standard and utilizing a support surface of a support section which is fixed and does not rotate upstream a discharge port for discharging said first coating material to said surface which is not coated.

**26.** A coating method according to claim 25 comprising:

a guide step which is disposed upstream said support step to guide said substrate so as to press said surface which is not coated directly or indirectly on at least said support surface; and
a second coating step to apply a second coating material, substantially at the same time with said first coating material, on locations on a rear surface of said substrate which are opposite to locations of said first coating step.

**27.** A coating method according to claim 25,
wherein said coating method comprises:

a second support step to directly or indirectly support the surface which is not coated of said substrate downstream said first coating step; and
a second coating step to apply a second coating material, substantially at the same time with said first coating material, on locations on a rear surface of said substrate which are at downstream locations coated at said first coating step,
wherein said support at said second support step is performed utilizing a support surface which is fixed and does not rotate upstream a blowout slot for blowing out said second coating material to a surface which is not coated.

EP 0 926 749 A2

**28.** A coating method according to claim 25,
wherein said coating method comprises:

a second coating step to apply, upstream of said first coating step, a second coating material to a surface which is not coated of said substrate which is opposite to a surface coated at said first coating step; and

a guide step to (1) press said surface which is not coated directly or indirectly onto said support surface by blowing out a gas from a location opposed to said support section to a surface of said substrate opposed to said surface which is not coated so as to make said substrate float up from the surface which blows out said gas or (2) to press said surface which is not coated directly or indirectly onto said support surface with a guide section disposed upstream of at least said support step,

wherein said second coating material is applied intermittently at a predetermined pitch at said second coating step and said first coating material is applied, at said first coating step, intermittently at the predetermined pitch to locations which are deviated for a predetermined distance from locations of said second coating material applied to said substrate.

**29.** A coating method according to claim 25,
wherein said coating material is a paste for electrodes for batteries.

**30.** A coating method according to claim 25,
wherein a nozzle means which is composed in order from the upstream side, of said support section and a discharge section which includes a slit as said discharge port, and wherein said support section protrudes from said discharge section toward said substrate.

**31.** A coating method according to claim 25,
wherein said coating material is applied while forming a reservoir of said coating material which is discharged from said slit in a space between said support section and said slit.

**32.** A coating method according to claim 28,
wherein a distance between said substrate and said discharge port is within a range of 10 to 1000 $\mu$m.

**33.** A coating method according to claim 28,
wherein said guide step is disposed upstream said support step,
wherein a second guide step to guide said substrate with a rotatable guide roll is disposed downstream said first coating step, and wherein a distance as measured from said guide roll to said discharge port is within a range of 0.01 to 10 m.

**34.** A coating method according to claim 30,
wherein said nozzle means has a downstream lip which has a flat surface downstream said slit, and
wherein an angle formed between the flat surface of the downstream lip and a surface of said substrate is within a range of $\pm$ 45 degrees.

**35.** A coating method according to claim 25,
wherein said coating method comprises a coating stop step to stop supplying said coating material and sucking said coating material substantially at the same time to supply said coating material intermittently to said discharge port.

**36.** A coating method according to claim 25,
wherein said support section has a curved surface and a tension to said substrate is within a range of 50 to 500 g/cm.

22

# F i g . 1

Drying step

Fig. 2

Fig. 3

EP 0 926 749 A2

**F i g . 4 ( a )**

**F i g . 4 ( b )**

**F i g . 4 (c)**

**F i g .   5 ( a )**

103 — R₂

105

102

101 — R₁

**F i g .   5 ( b )**

103

105

101 — R₁

**F i g .   5 ( c )**

103

105

102

101

↑ Gas

Fig. 6

Fig. 7

Fig. 8(a)

Fig. 8(b)

Fig. 9

EP 0 926 749 A2

Fig. 10(a)

8

3

9

Coating width

Fig. 10(b) PRIOR ART

8

3

9

Coating width

# F i g . 1 1

——— Embodiment
(fourth sample as counted from
above in Table 1)

----- Comparative example

Fig. 12

EP 0 926 749 A2

Fig. 13

Fig. 14

Fig. 15

Fig. 16

**F i g. 1 7 ( a )**

**F i g. 1 7 ( b )**

Fig. 18 PRIOR ART

Air mixing

5002    5004

5031    5003

EP 0 926 749 A2

EP 0 926 749 A2

Fig. 19

5002

5004

5032

5003

Fig. 20 PRIOR ART

EP 0 926 749 A2

# F i g. 2 1

Legend:
——— Embodiment
(third sample as counted from
above in Table 2)

------ Comparative example

Y-axis: Discharge capacity [mAh] — 1000, 1200, 1400, 1600, 1800

X-axis: Discharge current (mA) — 0, 1000, 2000, 3000, 4000

F i g .  2 2